(19) Europäisches Patentamt / European Patent Office / Office européen des brevets

(11) **EP 4 194 840 B1**

(12) **EUROPEAN PATENT SPECIFICATION**

(45) Date of publication and mention
of the grant of the patent:
**22.07.2026 Bulletin 2026/30**

(21) Application number: **21874845.7**

(22) Date of filing: **05.07.2021**

(51) International Patent Classification (IPC):
**G01N 21/41** (2006.01)     **G01J 3/443** (2006.01)
**G01J 11/00** (2006.01)     **G02F 1/35** (2006.01)
**G01J 9/02** (2006.01)

(52) Cooperative Patent Classification (CPC):
**G01N 21/41; G01J 3/443; G01J 9/0246;**
**G01J 11/00; G02F 1/353;** G02F 2203/12

(86) International application number:
**PCT/JP2021/025329**

(87) International publication number:
**WO 2022/070541 (07.04.2022 Gazette 2022/14)**

(54) **DISPERSION MEASUREMENT DEVICE AND DISPERSION MEASUREMENT METHOD**

DISPERSIONSMESSVORRICHTUNG UND DISPERSIONSMESSVERFAHREN

DISPOSITIF DE MESURE DE DISPERSION ET PROCÉDÉ DE MESURE DE DISPERSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2020 JP 2020167848**

(43) Date of publication of application:
**14.06.2023 Bulletin 2023/24**

(73) Proprietor: **Hamamatsu Photonics K.K.**
**Hamamatsu-shi, Shizuoka 435-8558 (JP)**

(72) Inventors:
• **WATANABE, Koyo**
**Hamamatsu-shi, Shizuoka 435-8558 (JP)**
• **TAKAHASHI, Hisanari**
**Hamamatsu-shi, Shizuoka 435-8558 (JP)**
• **SHIGEMATSU, Kyohei**
**Hamamatsu-shi, Shizuoka 435-8558 (JP)**
• **INOUE, Takashi**
**Hamamatsu-shi, Shizuoka 435-8558 (JP)**

(74) Representative: **Grünecker Patent- und Rechtsanwälte**
**PartG mbB**
**Leopoldstraße 4**
**80802 München (DE)**

(56) References cited:
EP-A1- 3 438 730     WO-A1-2020/203853
JP-A- 2000 193 557   JP-A- 2006 071 351
JP-A- 2018 138 910   JP-A- 2019 144 537
JP-A- H04 177 141    JP-A- H04 177 141
JP-A- H05 248 996    JP-A- H05 248 996
JP-A- H11 237 312    US-A1- 2002 176 071
US-A1- 2014 368 809

**Description**

**Technical Field**

The present disclosure relates to a dispersion measurement apparatus and a dispersion measurement method.

**Background Art**

Patent Document 1 and Non Patent Document 1 disclose a method of measuring a wavelength dispersion of a laser light pulse.

JP H04 177141 A relates to a method of measuring chromatic dispersion. JP H05248996 A relates to a device for measuring the wavelength dispersion of the optical fiber to be used in optical communication and the like. EP 3 438 730 A1 relates to a pulsed light generation apparatus and a pulsed light generation method.

**Citation List**

**Patent Literature**

Patent Document 1: Japanese Patent Application Laid-Open Publication No. 2006-502407

**Non Patent Literature**

Non Patent Document 1: Bingwei Xu et al., "Quantitative investigation of the multiphoton intrapulse interference phase scan method for simultaneous phase measurement and compensation of femtosecond laser pulses", Journal of the Optical Society of America B, Vol.23, No.4, pp.750-759, 2006

**Summary of Invention**

**Technical Problem**

The measurement technique described in Patent Document 1 and Non Patent Document 1 is called MIIPS (Multiphoton Intrapulse Interference Phase Scan). In this measurement technique, a dispersion is measured based on a change in an emission spectrum corresponding to a phase shift amount of a sinusoidal phase modulation pattern. Therefore, it is essential to measure the emission spectrum. In general, a combination of a dispersive element and a photodetector or a photodetector (spectrometer) capable of detecting wavelength-intensity characteristics is required to measure the emission spectrum. Therefore, an optical system becomes complicated.

An object of an embodiment is to provide a dispersion measurement apparatus and a dispersion measurement method capable of measuring a wavelength dispersion by a simple configuration.

**Solution to Problem**

A dispersion measurement apparatus according to the invention is defined in claim 1.

A dispersion measurement method according to the invention is defined in claim 7.

In the above apparatus and method, in the pulse forming unit (pulse forming step), the light pulse train including the plurality of second light pulses having time differences and center wavelengths different from each other is generated from the first light pulse. Further, the light pulse train passes through the measurement object. In this case, various feature values (for example, pulse interval, peak intensity, pulse width, and the like) in the temporal waveform of the light pulse train change due to the wavelength dispersion of the measurement object. That is, the various feature values in the temporal waveform of the light pulse train after passing through the measurement object have the correlation with the wavelength dispersion amount of the measurement object.

According to the above configuration, the image sensor capable of performing imaging at the imaging interval shorter than the minimum peak interval of the light pulse train is used, and the imaging data is generated by imaging the light pulse train passed through the measurement object. Further, the imaging data is received, the temporal waveform of the light pulse train is detected for each pixel of the image sensor, and the wavelength dispersion amount of the measurement object is estimated for each pixel of the image sensor based on the feature value of the temporal waveform.

Therefore, according to the above configuration, a distribution of the wavelength dispersion in the measurement object can be estimated. In addition, according to the above configuration, unlike the measurement technique described in Patent Document 1 and Non Patent Document 1, it is not necessary to measure the emission spectrum, and thus, the optical system of the imaging unit (imaging step) can be simplified, and the wavelength dispersion distribution in the measurement object can be measured by a simple configuration.

**Advantageous Effects of Invention**

According to the dispersion measurement apparatus and the dispersion measurement method of the embodiments, a wavelength dispersion can be measured by a simple configuration.

**Brief Description of Drawings**

[FIG. 1] FIG. 1 is a diagram schematically illustrating a configuration of a dispersion measurement apparatus according to an embodiment.

[FIG. 2] FIG. 2 is a diagram illustrating a configuration example of a pulse forming unit.

[FIG. 3] FIG. 3 is a diagram illustrating a modulation plane of a spatial light modulator.

[FIG. 4] FIG. 4 includes (a) a diagram showing an example of a spectrogram of a multi pulse with band control, (b) a diagram showing a temporal waveform of a light pulse train, and (c) a diagram showing a spectrum obtained by combining three light pulses $Pb_1$ to $Pb_3$.

[FIG. 5] FIG. 5 includes (a) a diagram showing an example of a spectrogram of a multi pulse without band control, (b) a diagram showing a temporal waveform of a light pulse train, and (c) a diagram showing a spectrum obtained by combining three light pulses $Pd_1$ to $Pd_3$.

[FIG. 6] FIG. 6 includes (a) a diagram showing an example of a temporal waveform of the light pulse train when a measurement object has no wavelength dispersion, and (b) a diagram showing an example of a temporal waveform of the light pulse train when the measurement object has a wavelength dispersion.

[FIG. 7] FIG. 7 is a diagram schematically illustrating a hardware configuration example of an operation unit.

[FIG. 8] FIG. 8 is a flowchart illustrating a dispersion measurement method.

[FIG. 9] FIG. 9 includes (a) a diagram showing a spectrum waveform of a light pulse of a single pulse shape, and (b) a diagram showing a temporal intensity waveform of the light pulse.

[FIG. 10] FIG. 10 includes (a) a diagram showing a spectrum waveform of output light from the pulse forming unit when a phase spectrum modulation of a rectangular wave shape is applied by the spatial light modulator, and (b) a diagram showing a temporal intensity waveform of the output light.

[FIG. 11] FIG. 11 is a diagram illustrating a configuration of a modulation pattern calculation apparatus for calculating a modulation pattern of the spatial light modulator.

[FIG. 12] FIG. 12 is a block diagram illustrating an internal configuration of a phase spectrum design unit and an intensity spectrum design unit.

[FIG. 13] FIG. 13 is a diagram illustrating a calculation procedure of a phase spectrum using an iterative Fourier transform method.

[FIG. 14] FIG. 14 is a diagram illustrating a calculation procedure of a phase spectrum function in the phase spectrum design unit.

[FIG. 15] FIG. 15 is a diagram illustrating a calculation procedure of a spectrum intensity in the intensity spectrum design unit.

[FIG. 16] FIG. 16 is a diagram illustrating an example of a generation procedure of a target spectrogram in a target generation unit.

[FIG. 17] FIG. 17 is a diagram illustrating an example of a procedure for calculating an intensity spectrum function.

[FIG. 18] FIG. 18 includes (a) a diagram showing a spectrogram $SG_{IFTA}(\omega,t)$, and (b) a diagram showing a target spectrogram $TargetSG_0(\omega,t)$ in which the spectrogram $SG_{IFTA}(\omega,t)$ is changed.

[FIG. 19] FIG. 19 includes (a) a graph showing a calculated modulation pattern, and (b) a graph showing a temporal waveform of a light pulse train generated by a simulation.

[FIG. 20] FIG. 20 is a spectrogram of the light pulse train generated by the simulation.

[FIG. 21] FIG. 21 includes (a) a graph showing a calculated modulation pattern, and (b) a graph showing a temporal waveform of a light pulse train generated by a simulation.

[FIG. 22] FIG. 22 is a spectrogram of the light pulse train generated by the simulation.

[FIG. 23] FIG. 23 includes (a), (b) graphs each plotting a relationship between a second-order dispersion amount of a light pulse and an average value of peak time intervals.

[FIG. 24] FIG. 24 is a graph plotting a relationship between a second-order dispersion amount of a light pulse and a peak intensity in the case of a light pulse train in which a center wavelength is different for each pulse.

[FIG. 25] FIG. 25 is a graph plotting a relationship between a second-order dispersion amount of a light pulse and a full width at half maximum in the case of a light pulse train in which a center wavelength is different for each pulse.

[FIG. 26] FIG. 26 includes (a), (b) graphs each plotting a relationship between a third-order dispersion amount of a light pulse and a difference of peak time intervals.

[FIG. 27] FIG. 27 is a graph plotting a relationship between a third-order dispersion amount of a light pulse and a peak intensity in the case of a light pulse train in which a center wavelength is different for each pulse.

[FIG. 28] FIG. 28 is a graph plotting a relationship between a third-order dispersion amount of a light pulse and a full width at half maximum in the case of a light pulse train in which a center wavelength is different for each pulse.

[FIG. 29] FIG. 29 is a diagram illustrating a configuration of the pulse forming unit as a first modification.

[FIG. 30] FIG. 30 is a diagram illustrating a configuration of the dispersion measurement apparatus according to a second modification.

[FIG. 31] FIG. 31 is a diagram schematically illustrating a correlation optical system for generating correlation light including an autocorrelation of a light pulse train as a configuration example of the correlation optical system.

[FIG. 32] FIG. 32 is a diagram schematically illustrating a correlation optical system for generating correlation light including a cross-correlation of a light pulse train as another configuration example of the correlation optical system.

[FIG. 33] FIG. 33 is a diagram schematically illustrating a correlation optical system for generating correlation light including a cross-correlation of a light pulse train as still another configuration example of the correlation optical system.

[FIG. 34] FIG. 34 is a flowchart illustrating the dispersion measurement method according to the second modification.

[FIG. 35] FIG. 35 includes (a) a graph showing an example of a spectrum waveform for generating a multi pulse with band control, and (b) a graph showing a temporal waveform of a light pulse train corresponding to the spectrum waveform shown in (a).

[FIG. 36] FIG. 36 includes (a) a graph showing another example of a spectrum waveform for generating a multi pulse with band control, and (b) a graph showing a temporal waveform of a light pulse train corresponding to the spectrum waveform shown in (a).

## Description of Embodiments

Hereinafter, embodiments of a dispersion measurement apparatus and a dispersion measurement method will be described in detail with reference to the accompanying drawings. In the description of the drawings, the same elements will be denoted by the same reference signs, and redundant description will be omitted. The present invention is not limited to these examples.

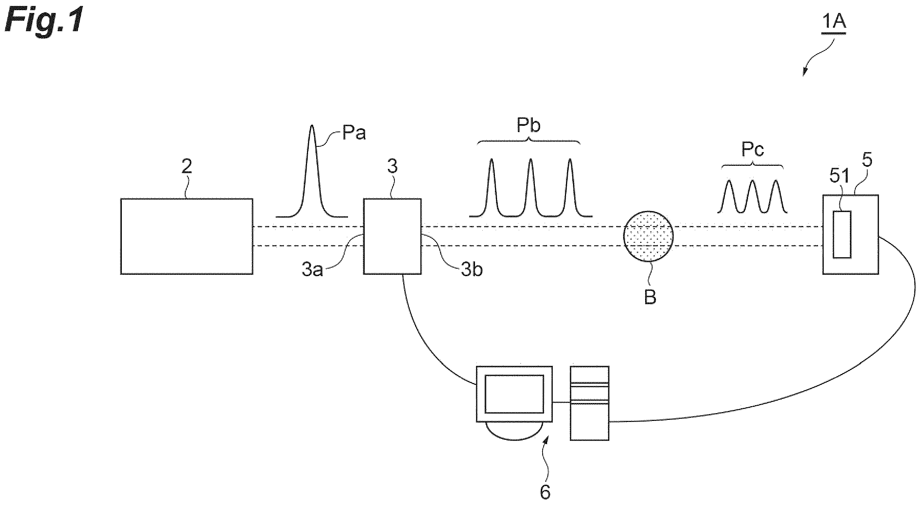

FIG. 1 is a diagram schematically illustrating a configuration of a dispersion measurement apparatus according to an embodiment. The dispersion measurement apparatus 1A is an apparatus for measuring a two-dimensional distribution of a wavelength dispersion of a measurement object B. The dispersion measurement apparatus 1A includes a pulsed laser light source 2, a pulse forming unit 3, an imaging unit 5, and an operation unit 6.

A light input end 3a of the pulse forming unit 3 is optically coupled to the pulsed laser light source 2 spatially or via an optical waveguide such as an optical fiber. The imaging unit 5 is optically coupled to a light output end 3b of the pulse forming unit 3 spatially or via an optical waveguide such as an optical fiber. The measurement object B is disposed on an optical path between the pulse forming unit 3 and the imaging unit 5. The operation unit 6 is electrically coupled to the pulse forming unit 3 and the imaging unit 5.

The pulsed laser light source 2 outputs a coherent light pulse Pa. The pulsed laser light source 2 is, for example, a femtosecond laser, and in one example, a solid-state laser light source such as an LD direct excitation type Yb:YAG pulsed laser.

The light pulse Pa is an example of a first light pulse in the present embodiment, and a temporal waveform is, for example, a Gaussian function shape. A full width at half maximum (FWHM) of the light pulse Pa is, for example, in the range of 10 fs to 10000 fs, and is 100 fs in one example. The light pulse Pa is a light pulse having a certain bandwidth, and includes a plurality of continuous wavelength components. In one example, the bandwidth of the light pulse Pa is 10 nm, and the center wavelength of the light pulse Pa is 1030 nm.

The pulse forming unit 3 is a unit for forming a light pulse train Pb including a plurality of light pulses (second light pulses) from the light pulse Pa. The light pulse train Pb is a single pulse group generated by dividing the spectrum constituting the light pulse Pa into a plurality of wavelength bands and using respective wavelength bands. In addition, there may be portions overlapping each other at the boundaries of the plurality of wavelength bands. In the following description, the light pulse train Pb may be referred to as "multi pulse with band control".

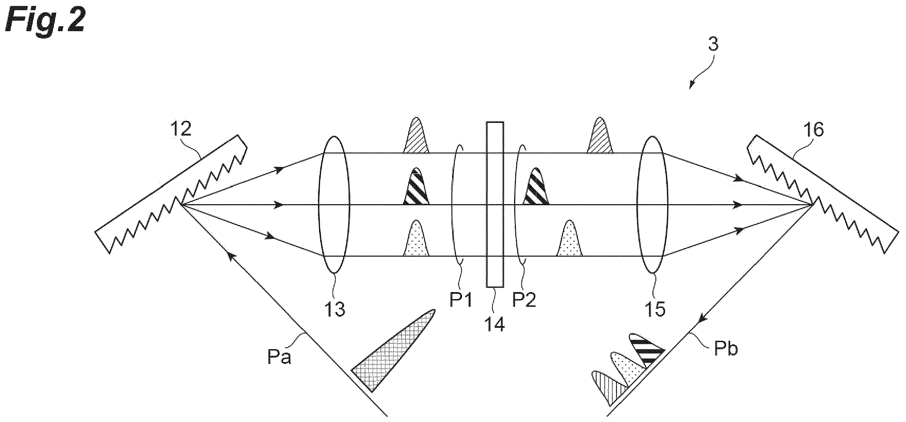

FIG. 2 is a diagram illustrating a configuration example of the pulse forming unit 3. The pulse forming unit 3 includes a diffraction grating 12, a lens 13, a spatial light modulator (SLM) 14, a lens 15, and a diffraction grating 16. The diffraction grating 12 is a dispersive element in the present embodiment, and is optically coupled to the pulsed laser light source 2. The SLM 14 is optically coupled to the diffraction grating 12 via the lens 13. The diffraction grating 12 spatially separates the plurality of wavelength components included in the light pulse Pa for each wavelength. In addition, as the dispersive element, another optical component such as a prism may be used instead of the diffraction grating 12.

The light pulse Pa is obliquely incident on the diffraction grating 12, and is spectrally dispersed into the plurality of wavelength components. The light P1 including the plurality of wavelength components is focused by the lens 13 for each wavelength component, and forms an image on a modulation plane of the SLM 14. The lens 13 may be a convex lens made of a light transmitting member or a concave mirror having a concave light reflection surface.

The SLM 14 shifts phases of the plurality of wavelength components output from the diffraction grating 12 for converting the light pulse Pa into the light pulse train Pb. For the above, the SLM 14 receives a control signal from the operation unit 6 (see FIG. 1), and simultaneously performs a phase modulation and an intensity modulation of the light P1. In addition, the SLM 14 may perform only a phase modulation or only an intensity modulation. The SLM 14 is, for example, of a phase modulation type. In one example, the SLM 14 is of a liquid crystal on silicon (LCOS) type. In addition, the SLM 14 of a transmission type is illustrated in the diagram, and the SLM 14 may be of a reflection type.

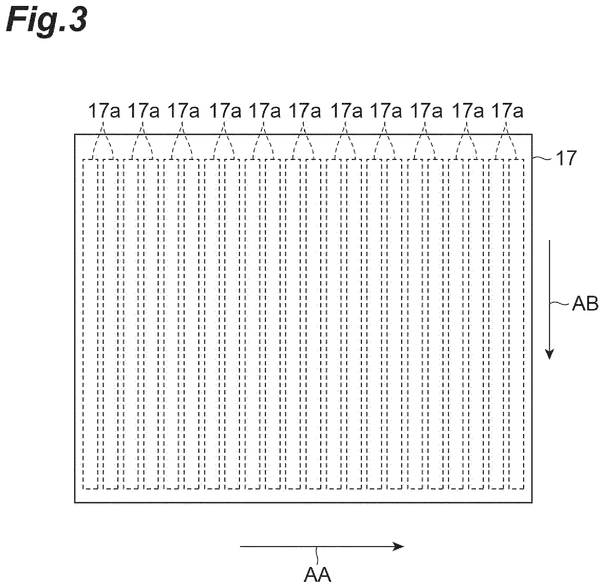

FIG. 3 is a diagram illustrating a modulation plane 17 of the SLM 14. As illustrated in FIG. 3, in the modulation plane 17, a plurality of modulation regions 17a are arranged along a certain direction AA, and each modulation region 17a extends in a direction AB intersecting with the direction AA. The direction AA is a dispersing direction by the diffraction grating 12.

The modulation plane 17 functions as a Fourier transform plane, and each corresponding wavelength component after the dispersion is incident on each of the plurality of modulation regions 17a. The SLM 14 modulates a phase and an intensity of each incident wavelength component, independently from the other wavelength components, in each modulation region 17a. In addition, since the SLM 14 in the present embodiment is of the phase modulation type, the intensity modulation is realized by a phase pattern (phase image) presented on the modulation plane 17.

Each wavelength component of modulated light P2 modulated by the SLM 14 is focused at a point on the diffraction grating 16 by the lens 15. At this time, the lens 15 functions as a focusing optical system for focusing the modulated light P2. The lens 15 may be a convex lens made of a light transmitting member or a concave mirror having a concave light reflection surface. Further, the diffraction grating 16 functions as a combining optical system, and combines the respective wavelength components after the modulation. That is, by the lens 15 and the diffraction grating 16, the plurality of wavelength components of the modulated light P2 are focused and combined to form the multi pulse with band control (light pulse train Pb).

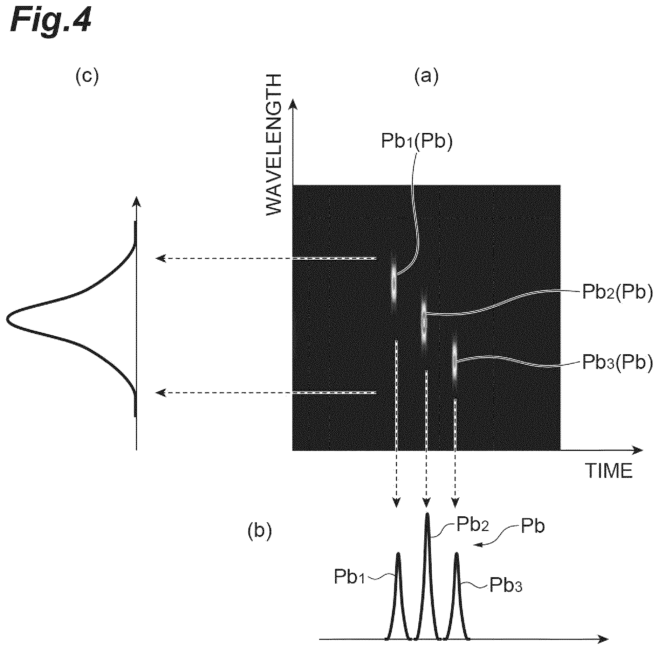

FIG. 4 includes diagrams illustrating an example of the multi pulse with band control. In this example, a light pulse train Pb including three light pulses $Pb_1$ to $Pb_3$ is illustrated. (a) in FIG. 4 is a spectrogram showing the time on the horizontal axis and the wavelength on the vertical axis, and the light intensity is represented by light and shade of color. (b) in FIG. 4 shows a temporal waveform of the light pulse train Pb. The temporal waveforms of the light pulses $Pb_1$ to $Pb_3$ are, for example, Gaussian function shapes.

As shown in (a) in FIG. 4 and (b) in FIG. 4, the peaks of the three light pulses $Pb_1$ to $Pb_3$ are temporally separated from each other, and the propagation timings of the three light pulses $Pb_1$ to $Pb_3$ are shifted from each other. In other words, with respect to one light pulse $Pb_1$, another light pulse $Pb_2$ has a time delay, and with respect to the other light pulse $Pb_2$, yet another light pulse $Pb_3$ has a time delay. In addition, the foot portions of the adjacent light pulses $Pb_1$ and $Pb_2$ (or $Pb_2$ and $Pb_3$) may overlap each other.

The time interval (peak interval) between the adjacent light pulses $Pb_1$ and $Pb_2$ (or $Pb_2$ and $Pb_3$) is, for example, in the range of 10 fs to 10000 fs, and is 2000 fs in one example. Further, the FWHM of each of the light pulses $Pb_1$ to $Pb_3$ is, for example, in the range of 10 fs to 5000 fs, and is 300 fs in one example.

(c) in FIG. 4 shows a spectrum obtained by combining the three light pulses $Pb_1$ to $Pb_3$. As shown in (c) in FIG. 4, the spectrum obtained by combining the three light pulses $Pb_1$ to $Pb_3$ has a single peak, and with reference to (a) in FIG. 4, the center wavelengths of the three light pulses $Pb_1$ to $Pb_3$ are shifted from each other. The spectrum having the single peak shown in (c) in FIG. 4 is substantially the same as the spectrum of the light pulse Pa.

The peak wavelength interval of the adjacent light pulses $Pb_1$ and $Pb_2$ (or $Pb_2$ and $Pb_3$) is determined by the spectrum bandwidth of the light pulse Pa, and is, in general, within the range of two times the full width at half maximum. In one example, when the spectrum bandwidth of the light pulse Pa is 10 nm, the peak wavelength interval is 5 nm. As a specific example, when the center wavelength of the light pulse Pa is 1030 nm, the peak wavelengths of the three light pulses $Pb_1$ to $Pb_3$ may be 1025 nm, 1030 nm, and 1035 nm, respectively.

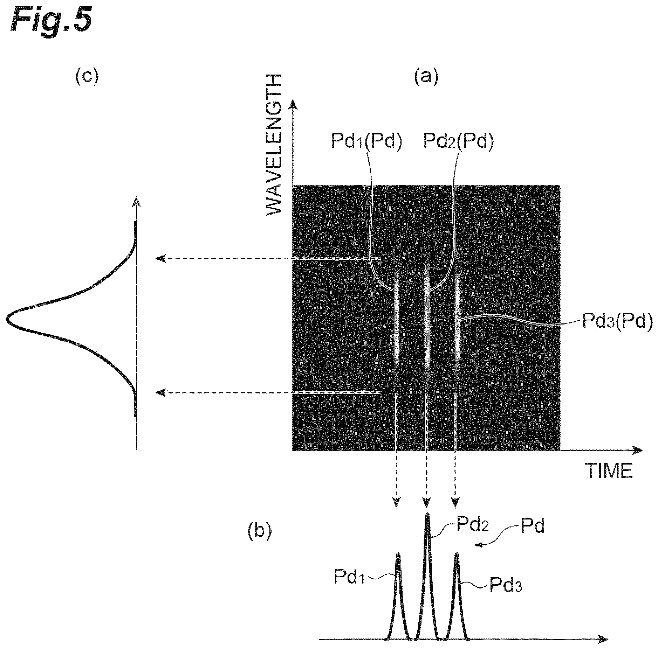

FIG. 5 includes diagrams illustrating an example of the multi pulse without band control as a comparative example. In this example, a light pulse train Pd including three light pulses $Pd_1$ to $Pd_3$ is illustrated. (a) in FIG. 5 is a spectrogram, similar to (a) in FIG. 4, showing the time on the horizontal axis and the wavelength on the vertical axis, and the light intensity is represented by light and shade of color. (b) in FIG. 5 shows a temporal waveform of the light pulse train Pd. (c) in FIG. 5 shows a spectrum obtained by combining the three light pulses $Pd_1$ to $Pd_3$.

As shown in (a) to (c) in FIG. 5, the peaks of the three light pulses $Pd_1$ to $Pd_3$ are temporally separated from each other, and the center wavelengths of the three light pulses $Pd_1$ to $Pd_3$ coincide with each other. The pulse forming unit 3 of the present embodiment does not generate such a light pulse train Pd, but generates the light pulse train Pb having different center wavelengths as shown in FIG. 4.

Referring again to FIG. 1. The light pulse train Pb output from the pulse forming unit 3 is passed (transmitted) through the measurement object B. At this time, the light pulse train Pb is converted into a light pulse train Pc by the wavelength dispersion of the measurement object B.

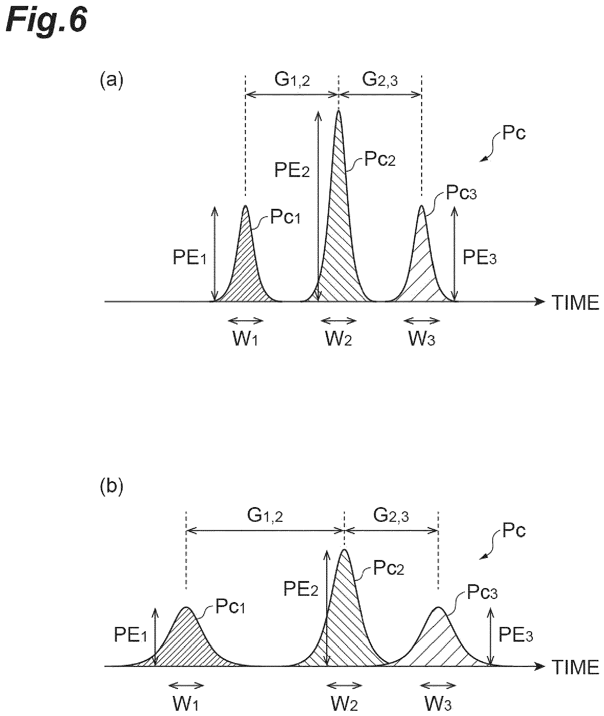

FIG. 6 includes diagrams for conceptually describing a feature value of the light pulse train Pc passed through the measurement object B. (a) in FIG. 6 illustrates an example of a temporal waveform of the light pulse train Pc when the measurement object B has no wavelength dispersion (wavelength dispersion is zero). (b) in FIG. 6 illustrates an example of a temporal waveform of the light pulse train Pc when the measurement object B has a wavelength dispersion (wavelength dispersion is not zero).

In addition, in these examples, the light pulse train Pb input to the measurement object B includes the three light pulses $Pb_1$ to $Pb_3$ shown in (b) in FIG. 4. In this case, the light pulse train Pc includes three light pulses $Pc_1$ to $Pc_3$ corresponding to the light pulses $Pb_1$ to $Pb_3$, respectively. Further, it is assumed that the peak intensities of the light pulses $Pc_1$ to $Pc_3$ are $PE_1$ to $PE_3$, the full widths at half maximum (FWHMs) of the light pulses $Pc_1$ to $Pc_3$ are $W_1$ to $W_3$, the peak time interval (pulse interval) between the light pulses $Pc_1$ and $Pc_2$ is $G_{1,2}$, and the peak time interval between the light pulses $Pc_2$ and $Pc_3$ is $G_{2,3}$.

As shown in (a) in FIG. 6, when the measurement object B has no wavelength dispersion, the temporal waveform of the light pulse train Pc is substantially the same as the temporal waveform of the light pulse train Pb. In this example, for the peak intensities, $PE_2$ is larger than $PE_1$ and $PE_3$, and $PE_1$ and $PE_3$ are substantially equal. Further, for the full widths at half maximum, $W_1$, $W_2$, and $W_3$ are substantially equal to each other. For the peak time intervals, $G_{1,2}$ and $G_{2,3}$ are substantially equal.

On the other hand, as shown in (b) in FIG. 6, when the measurement object B has a wavelength dispersion, the temporal waveform of the light pulse train Pc changes from the temporal waveform of the light pulse train Pb. In this example, the peak intensities $PE_1$ to $PE_3$ of the light pulses $Pc_1$ to $Pc_3$ are decreased as compared with (a) in FIG. 6, and the full widths at half maximum $W_1$ to $W_3$ of the light pulses $Pc_1$ to $Pc_3$ are increased as compared with (a) in FIG. 6. Further, the peak time interval $G_{1,2}$ is longer than that in (a) in FIG. 6.

As described above, when the measurement object B has the wavelength dispersion, the feature values (peak intensities $PE_1$ to $PE_3$, full widths at half maximum $W_1$ to $W_3$, peak time intervals $G_{1,2}$ and $G_{2,3}$) of the temporal waveform of the light pulse train Pc are changed as compared with the case where the measurement object B does not have the wavelength dispersion. Further, the amount of change depends on the wavelength dispersion amount of the measurement object B. Therefore, the wavelength dispersion amount of the measurement object B can be accurately and easily known by observing the change in the feature value of the temporal waveform of the light pulse train Pc.

Referring again to FIG. 1. The imaging unit 5 images the light pulse train Pc passed through the measurement object B, and generates imaging data including a two-dimensional image. For the above, the imaging unit 5 includes an image sensor 51 being optically coupled to the pulse forming unit 3. The image sensor 51 has a plurality of pixels arranged two-dimensionally, and is an imaging element capable of performing imaging at an imaging interval shorter than a minimum peak interval of the light pulse train Pb (in other words, an imaging interval capable of acquiring the temporal waveform of the light pulse train Pc). The plurality of imaging data for each time obtained in this manner are sent to the operation unit 6.

The operation unit 6 detects the temporal waveform of the light pulse train Pc for each pixel of the image sensor 51 from the plurality of imaging data for each time provided from the imaging unit 5. That is, the operation unit 6 generates time-series data representing the temporal waveform of the light pulse train Pc for each pixel of the image sensor 51. Further, the operation unit 6 estimates the partial wavelength dispersion amount in the measurement object B (that is, of a portion corresponding to each pixel), for each pixel, based on the feature value of the temporal waveform of each pixel.

As described above, various feature values (for example, pulse interval, peak intensity, pulse width, and the like) in the temporal waveform of the light pulse train Pc passed through the measurement object B have a correlation with the wavelength dispersion amount of the measurement object B. Therefore, the operation unit 6 can accurately estimate the two-dimensional distribution of the wavelength dispersion amount of the measurement object B by evaluating the feature value of the temporal waveform of the light pulse train Pc for each pixel.

Further, the operation unit 6 may calculate a two-dimensional distribution of at least one value of a refractive index, a reflectance, an absorptance, and a thickness of the measurement object B based on the two-dimensional distribution of the estimated wavelength dispersion amount. The wavelength dispersion amount of the measurement object B is a physical quantity representing a degree of a refractive index difference of the measurement object B for each wavelength.

In order to obtain the refractive index for each wavelength, the thickness information of the measurement object B is required in addition to the wavelength dispersion amount. In addition, when there is the refractive index information, the thickness can be estimated from the wavelength dispersion amount. Further, the reflectance of the measurement object B can be estimated from the refractive index at a boundary with a substance. The absorptance (absorption spectrum) of the measurement object B can be estimated from the intensity change of the light pulse train Pc transmitted through the measurement object B.

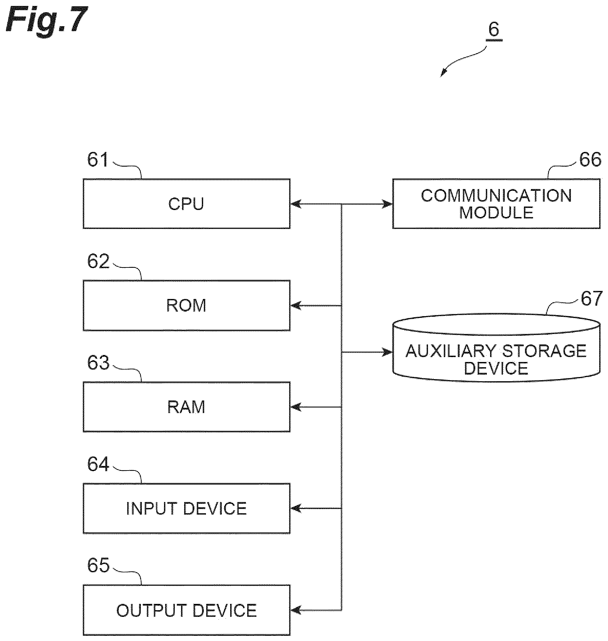

FIG. 7 is a diagram schematically illustrating a hardware configuration example of the operation unit 6. As illustrated in FIG. 7, the operation unit 6 may be physically configured as a normal computer including a processor (CPU) 61, a main storage device such as a ROM 62 and a RAM 63, an input device 64 such as a keyboard, a mouse, and a touch screen, an output device 65 such as a display (including a touch screen), a communication module 66 such as a network card for transmitting/receiving data to/from other devices, an auxiliary storage device 67 such as a hard disk, and the like.

The processor 61 of the computer can implement the above function of the operation unit 6 by a wavelength dispersion amount calculation program. In other words, the wavelength dispersion amount calculation program causes the processor 61 of the computer to operate as the operation unit 6. The wavelength dispersion amount calculation program is stored in a storage device (storage medium) inside or outside the computer, for example, the auxiliary storage device 67. The storage device may be a non-transitory recording medium. Examples of the recording medium include a recording medium such as a flexible disk, a CD, and a DVD, a recording medium such as a ROM, a semiconductor memory, a cloud server, and the like.

The auxiliary storage device 67 stores the feature value of the temporal waveform of the light pulse train Pc theoretically calculated in advance on the assumption that the wavelength dispersion of the measurement object B is zero. By comparing this feature value with the feature value of the temporal waveform detected by the operation unit 6, it is possible to know how much the feature value of the light pulse train Pc of each pixel has changed due to the wavelength dispersion distribution of the measurement object B. Therefore, the operation unit 6 can estimate the two-dimensional distribution of the wavelength dispersion amount of the measurement object B by comparing the feature value stored in the auxiliary storage device 67 and the feature value of the detected temporal waveform of each pixel.

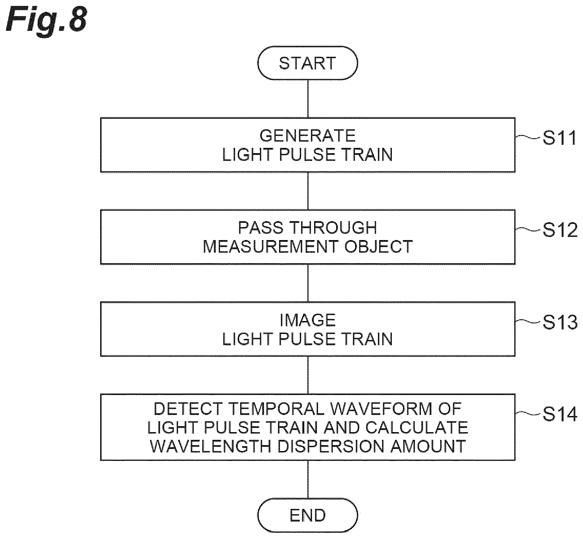

FIG. 8 is a flowchart illustrating a dispersion measurement method using the dispersion measurement apparatus 1A having the above configuration. In this method, first, in a pulse forming step S11, design information necessary for forming the light pulse train Pb is prepared. The design information includes, for example, a peak time interval, a peak intensity, a full width at half maximum, a pulse number, a band control amount, and the like, when it is assumed that the wavelength dispersion of the measurement object B is zero.

Then, from the light pulse Pa output from the pulsed laser light source 2, the light pulse train Pb including the plurality of light pulses $Pb_1$ to $Pb_3$ having time differences and center wavelengths different from each other is formed. For example, a plurality of wavelength components included in the light pulse Pa are spatially separated for each wavelength, the phases of the plurality of wavelength components are shifted from each other using the SLM 14, and then the plurality of wavelength components are focused. Thus, the light pulse train Pb can be easily generated. Subsequently, in a step S12, the light pulse train Pb passes (transmits) through the measurement object B.

Subsequently, in an imaging step S13, the image sensor 51 capable of performing imaging at the imaging interval shorter than the minimum peak interval of the light pulse train Pb is used to image the light pulse train Pc passed through the measurement object B, thereby generating the plurality of imaging data for each time.

Subsequently, in an operation step S14, the temporal waveform of the light pulse train Pc is detected from the plurality of imaging data for each pixel of the image sensor 51, and the partial wavelength dispersion amount of the measurement object B is estimated for each pixel based on the feature value of the temporal waveform. For example, the partial wavelength dispersion amount of the measurement object B is estimated for each pixel based on at least one of the peak intensities $E_1$ to $E_3$, the full widths at half maximum $W_1$ to $W_3$, and the peak time intervals $G_{1,2}$ and $G_{2,3}$ of the light pulse train Pc.

Further, the feature value of the temporal waveform of the light pulse train Pc theoretically calculated in advance on the assumption that the wavelength dispersion of the measurement object B is zero is compared with the feature value of the temporal waveform detected in the operation step S14 to estimate the wavelength dispersion amount of the measurement object B for each pixel. In addition, the feature value used in the design of the light pulse train Pb may be used as the feature value of the temporal waveform of the light pulse train Pc on the assumption that the wavelength dispersion of the measurement object B is zero. Further, in the operation step S14, at least one value of the partial refractive index, the reflectance, the absorptance, and the thickness of the measurement object B may be calculated for each pixel based on the estimated wavelength dispersion amount for each pixel.

The phase modulation for generating the multi pulse with band control in the SLM 14 of the pulse forming unit 3 illustrated in FIG. 2 will be described in detail. A region (spectral domain) before the lens 15 and a region (time domain) after the diffraction grating 16 are in a Fourier transform relation with each other, and the phase modulation in the spectral domain affects the temporal intensity waveform in the time domain. Therefore, the output light from the pulse forming unit 3 may have various temporal intensity waveforms different from that of the light pulse Pa according to the modulation pattern of the SLM 14.

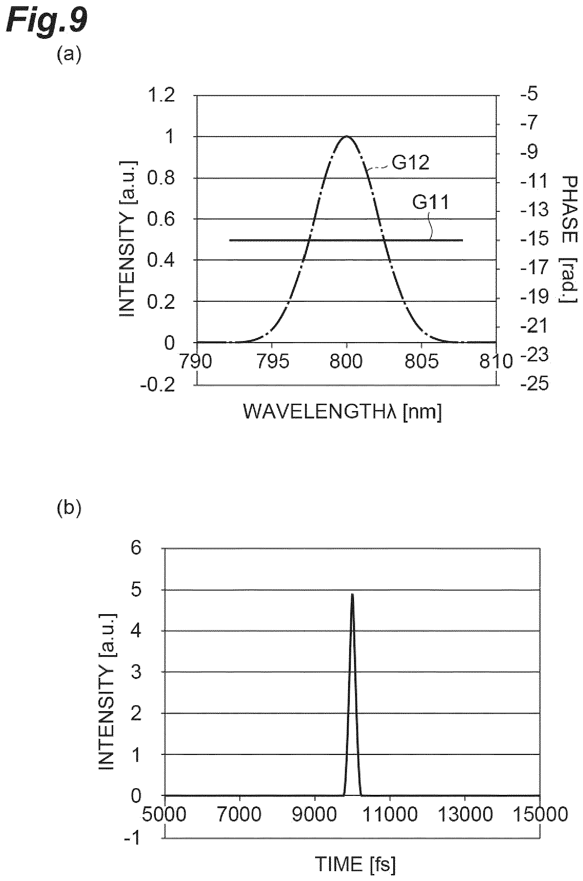

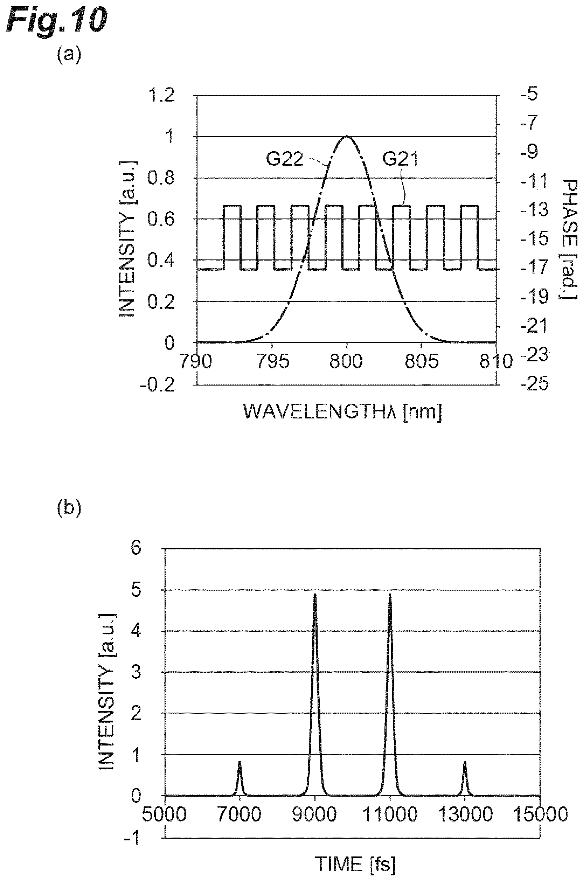

(a) in FIG. 9 shows, as an example, a spectrum waveform (spectrum phase G11 and spectrum intensity G12) of the light pulse Pa of a single pulse shape, and (b) in FIG. 9 shows a temporal intensity waveform of the light pulse Pa. Further, (a) in FIG. 10 shows, as an example, a spectrum waveform (spectrum phase G21 and spectrum intensity G22) of the output light from the pulse forming unit 3 when a phase spectrum modulation of a rectangular wave shape is applied in the SLM 14, and (b) in FIG. 10 shows a temporal intensity waveform of the output light.

In (a) in FIG. 9 and (a) in FIG. 10, the horizontal axis indicates the wavelength (nm), the left vertical axis indicates the intensity value (arb. unit) of the intensity spectrum, and the right vertical axis indicates the phase value (rad) of the phase spectrum. Further, in (b) in FIG. 9 and (b) in FIG. 10, the horizontal axis indicates the time (femtosecond), and the vertical axis indicates the light intensity (arb. unit).

In this example, the single pulse of the light pulse Pa is converted into the double pulse with high-order light by applying the phase spectrum waveform of the rectangular wave shape to the output light. In addition, the spectrum and the waveform shown in FIG. 10 are only examples, and the temporal intensity waveform of the output light from the pulse forming unit 3 can be set into various shapes by combining various phase spectra and intensity spectra.

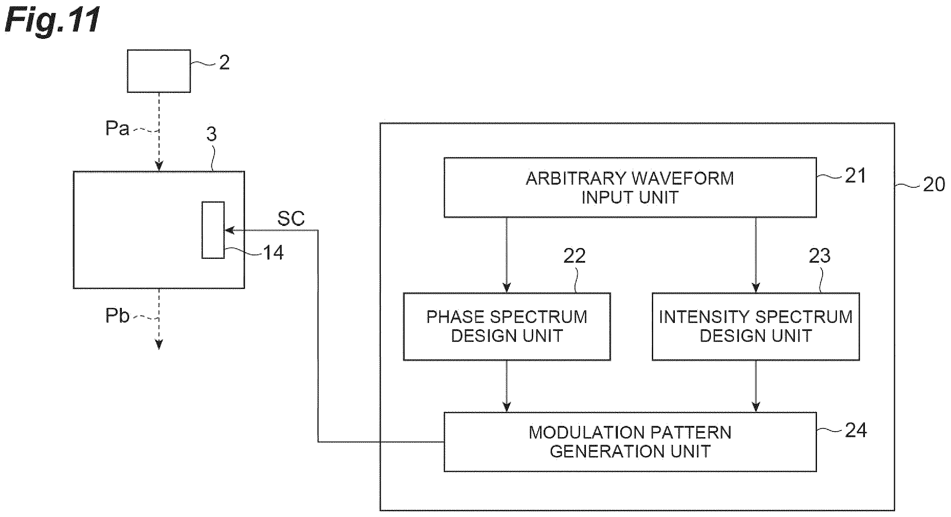

FIG. 11 is a diagram illustrating a configuration of a modulation pattern calculation apparatus 20 for calculating the modulation pattern of the SLM 14. The modulation pattern calculation apparatus 20 is a computer having a processor including, for example, a personal computer, a smart device such as a smartphone and a tablet terminal, and a cloud server. In addition, the operation unit 6 illustrated in FIG. 1 may also serve as the modulation pattern calculation apparatus 20.

The modulation pattern calculation apparatus 20 is electrically coupled to the SLM 14, calculates a phase modulation pattern for approximating the temporal intensity waveform of the output light of the pulse forming unit 3 to a desired waveform, and provides a control signal including the phase modulation pattern to the SLM 14. The modulation pattern is data for controlling the SLM 14, and includes a table of the intensity of the complex amplitude distribution or the intensity of the phase distribution. The modulation pattern is, for example, a computer-generated hologram (CGH).

The modulation pattern calculation apparatus 20 of the present embodiment causes the SLM 14 to present a phase pattern including a phase modulation phase pattern that gives a phase spectrum for obtaining the desired waveform to the output light and an intensity modulation phase pattern that gives an intensity spectrum for obtaining the desired waveform to the output light. For this purpose, as illustrated in FIG. 11, the modulation pattern calculation apparatus 20 includes an arbitrary waveform input unit 21, a phase spectrum design unit 22, an intensity spectrum design unit 23, and a modulation pattern generation unit 24.

That is, the processor of the computer provided in the modulation pattern calculation apparatus 20 implements the function of the arbitrary waveform input unit 21, the function of the phase spectrum design unit 22, the function of the intensity spectrum design unit 23, and the function of the modulation pattern generation unit 24. The respective functions may be realized by the same processor, or may be realized by different processors.

The processor of the computer can implement the above respective functions by a modulation pattern calculation program. Therefore, the modulation pattern calculation program causes the processor of the computer to operate as the arbitrary waveform input unit 21, the phase spectrum design unit 22, the intensity spectrum design unit 23, and the modulation pattern generation unit 24 in the modulation pattern calculation apparatus 20.

The modulation pattern calculation program is stored in a storage device (storage medium) inside or outside the computer. The storage device may be a non-transitory recording medium. Examples of the recording medium include a recording medium such as a flexible disk, a CD, and a DVD, a recording medium such as a ROM, a semiconductor memory, a cloud server, and the like.

The arbitrary waveform input unit 21 receives the desired temporal intensity waveform input from an operator. The operator inputs information on the desired temporal intensity waveform (for example, pulse interval, pulse width, pulse number, and the like) to the arbitrary waveform input unit 21. The information on the desired temporal intensity waveform is provided to the phase spectrum design unit 22 and the intensity spectrum design unit 23.

The phase spectrum design unit 22 calculates a phase spectrum of the output light of the pulse forming unit 3 suitable for realizing the given desired temporal intensity waveform. The intensity spectrum design unit 23 calculates an intensity spectrum of the output light of the pulse forming unit 3 suitable for realizing the given desired temporal intensity waveform.

The modulation pattern generation unit 24 calculates a phase modulation pattern (for example, a computer-generated hologram) for applying the phase spectrum obtained in the phase spectrum design unit 22 and the intensity spectrum obtained in the intensity spectrum design unit 23 to the output light of the pulse forming unit 3. Then, the control signal SC including the calculated phase modulation pattern is provided to the SLM 14. The SLM 14 is controlled based on the control signal SC.

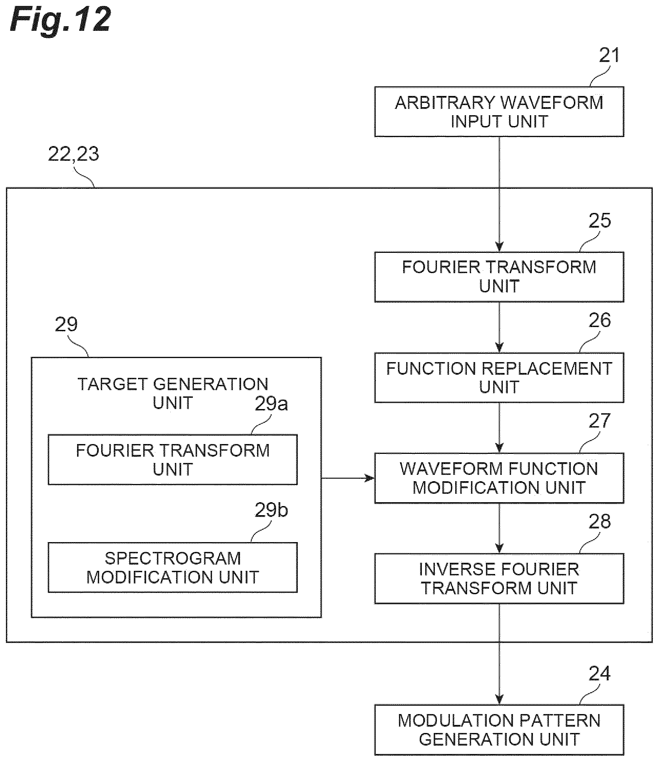

FIG. 12 is a block diagram illustrating an internal configuration of the phase spectrum design unit 22 and the intensity spectrum design unit 23. As illustrated in FIG. 12, each of the phase spectrum design unit 22 and the intensity spectrum design unit 23 includes a Fourier transform unit 25, a function replacement unit 26, a waveform function modification unit 27, an inverse Fourier transform unit 28, and a target generation unit 29. The target generation unit 29 includes a Fourier transform unit 29a and a spectrogram modification unit 29b. The functions of these components will be described in detail later.

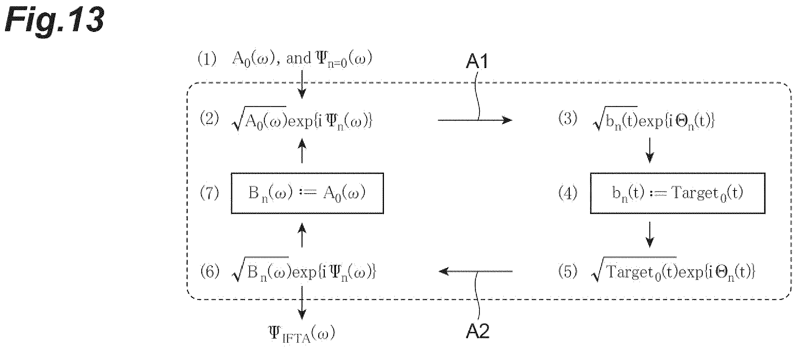

The desired temporal intensity waveform is expressed as a function in the time domain, and the phase spectrum is expressed as a function in the frequency domain. Therefore, the phase spectrum corresponding to the desired temporal intensity waveform is obtained by, for example, an iterative Fourier transform based on the desired temporal intensity waveform. FIG. 13 is a diagram illustrating a calculation procedure of the phase spectrum using the iterative Fourier transform method.

First, an initial intensity spectrum function $A_0(\omega)$ and a phase spectrum function $\Psi_0(\omega)$ to be functions of a frequency $\omega$ are prepared (process number (1) in the drawing). In one example, the intensity spectrum function $A_0(\omega)$ and the phase spectrum function $\Psi_0(\omega)$ represent the spectrum intensity and the spectrum phase of the input light, respectively. Next, a waveform function (a) in the frequency domain including the intensity spectrum function $A_0(\omega)$ and the phase spectrum function $\Psi_n(\omega)$ is prepared (process number (2) in the drawing).

[Formula 1]

$$\sqrt{A_0(\omega)}\exp\{i\Psi_n(\omega)\} \quad \cdots \quad (a)$$

A subscript n represents after an n-th Fourier transform process. Before a first Fourier transform process, the initial phase spectrum function $\Psi_0(\omega)$ described above is used as the phase spectrum function $\Psi_n(\omega)$. i is an imaginary number.

Next, a Fourier transform from the frequency domain to the time domain is performed on the function (a) (arrow A1 in the drawing). As a result, a waveform function (b) in the frequency domain including a temporal intensity waveform function $b_n(t)$ and a temporal phase waveform function $\Theta_n(t)$ is obtained (process number (3) in the drawing).

[Formula 2]

$$\sqrt{b_n(t)}\exp\{i\Theta_n(t)\} \quad \cdots \quad (b)$$

Next, the temporal intensity waveform function $b_n(t)$ included in the function (b) is replaced by a temporal intensity waveform function $Target_0(t)$ based on the desired waveform (process numbers (4) and (5) in the drawing).

[Formula 3]

$$b_n(t) := Target_0(t) \quad \cdots \quad (c)$$

[Formula 4]

$$\sqrt{Target_0(t)}\exp\{i\Theta_n(t)\} \quad \cdots \quad (d)$$

Next, an inverse Fourier transform from the time domain to the frequency domain is performed on the function (d) (arrow A2 in the drawing). As a result, a waveform function (e) in the frequency domain including an intensity spectrum function $B_n(\omega)$ and the phase spectrum function $\Psi_n(\omega)$ is obtained (process number (6) in the drawing).

[Formula 5]

$$\sqrt{B_n(\omega)}\exp\{i\Psi_n(\omega)\} \quad \cdots \quad (e)$$

Next, to constrain the intensity spectrum function $B_n(\omega)$ included in the function (e), it is replaced by the initial intensity spectrum function $A_0(\omega)$ (process number (7) in the drawing).

[Formula 6]

$$B_n(\omega) := A_0(\omega) \quad \cdots \quad (f)$$

Subsequently, the above processes (2) to (7) are repeatedly performed a plurality of times, so that the phase spectrum shape represented by the phase spectrum function $\Psi_n(\omega)$ in the waveform function can be brought close to a phase spectrum shape corresponding to the desired temporal intensity waveform. A phase spectrum function $\Psi_{IFTA}(\omega)$ to be finally obtained becomes a basis of a modulation pattern for obtaining the desired temporal intensity waveform.

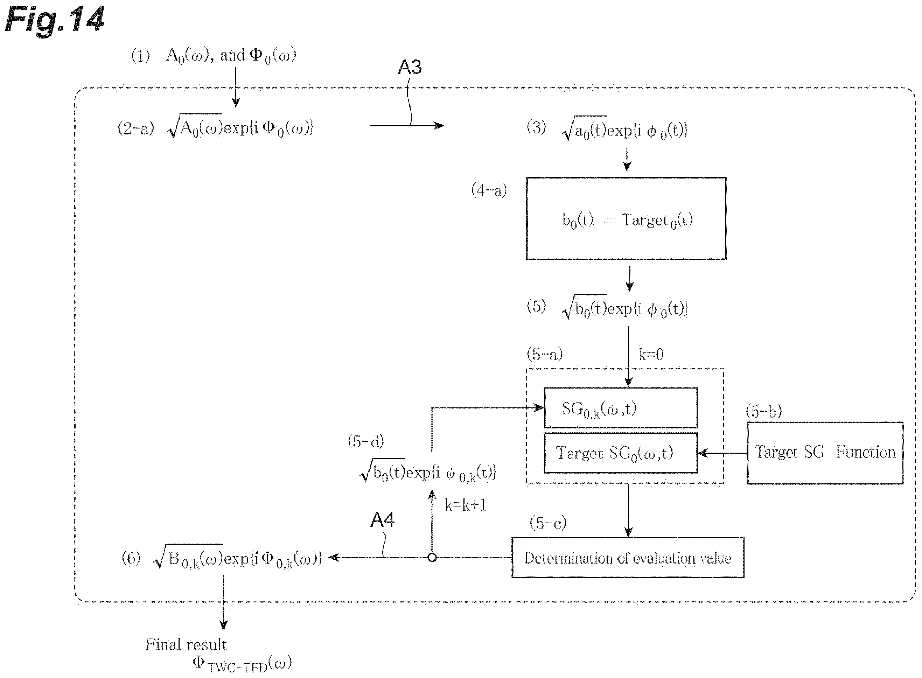

However, in the iterative Fourier method described above, although it is possible to control the temporal intensity waveform, there is a problem in that it is not possible to control a frequency component (band wavelength) constituting the temporal intensity waveform. Therefore, the modulation pattern calculation apparatus 20 according to the present embodiment calculates the phase spectrum function and the intensity spectrum function on which the modulation pattern is based, using a calculation method described below. FIG. 14 is a diagram illustrating a calculation procedure of the phase spectrum function in the phase spectrum design unit 22.

First, an initial intensity spectrum function $A_0(\omega)$ and a phase spectrum function $\Phi_0(\omega)$ to be functions of a frequency $\omega$ are prepared (process number (1) in the drawing). In one example, the intensity spectrum function $A_0(\omega)$ and the phase spectrum function $\Phi_0(\omega)$ represent the spectrum intensity and the spectrum phase of the input light, respectively. Next, a first waveform function (g) in the frequency domain including the intensity spectrum function $A_0(\omega)$ and the phase spectrum function $\Phi_0(\omega)$ is prepared (process number (2-a)). Here, i is an imaginary number.

[Formula 7]

$$\sqrt{A_0(\omega)}\exp\{i\Phi_0(\omega)\} \quad \cdots \quad (\text{g})$$

Next, the Fourier transform unit 25 of the phase spectrum design unit 22 performs the Fourier transform from the frequency domain to the time domain on the function (g) (arrow A3 in the drawing). As a result, a second waveform function (h) in the time domain including a temporal intensity waveform function $a_0(t)$ and a temporal phase waveform function $\phi_0(t)$ is obtained (Fourier transform step, process **number** (3)).

[Formula 8]

$$\sqrt{a_0(t)}\exp\{i\varphi_0(t)\} \quad \cdots \quad (\text{h})$$

Next, as shown in the following Formula (i), the function replacement unit 26 of the phase spectrum design unit 22 inputs the temporal intensity waveform function $Target_0(t)$ based on the desired waveform input in the arbitrary waveform input unit 21 to a temporal intensity waveform function $b_0(t)$ (process number (4-a)).

[Formula 9]

$$b_0(t) = Target_0(t) \quad \cdots \quad (\text{i})$$

Next, as shown in the following Formula (j), the function replacement unit 26 of the phase spectrum design unit 22 replaces the temporal intensity waveform function $a_0(t)$ by the temporal intensity waveform function $b_0(t)$. That is, the temporal intensity waveform function $a_0(t)$ included in the function (h) is replaced by the temporal intensity waveform function $Target_0(t)$ based on the desired waveform (function replacement step, process number (5)).

[Formula 10]

$$\sqrt{b_0(t)}\exp\{i\varphi_0(t)\} \quad \cdots \quad (\text{j})$$

Next, the waveform function modification unit 27 of the phase spectrum design unit 22 modifies the second waveform function so as to bring a spectrogram of the second waveform function (j) after the replacement close to a target spectrogram generated in advance according to a desired wavelength band. First, the second waveform function (j) is transformed into a spectrogram $SG_{0,k}(\omega,t)$ by performing a time-frequency transform on the second waveform function (j) after the replacement (process number (5-a) in the drawing). A subscript k represents a k-th transform process.

The time-frequency transform refers to performing frequency filter processing or numerical calculation processing (processing of multiplying a window function while shifting the window function and deriving a spectrum for each time) on a composite signal such as a temporal waveform, and transforming it into three-dimensional information including a time, a frequency, and an intensity (spectrum intensity) of a signal component. Further, in the present embodiment, the transform result (time, frequency, spectrum intensity) is defined as a "spectrogram" .

Examples of the time-frequency transform include a short-time Fourier transform (STFT), a wavelet transform (Haar wavelet transform, Gabor wavelet transform, Mexican hat wavelet transform, Morlet wavelet transform), and the like.

Further, a target spectrogram $TargetSG_0(\omega,t)$ generated in advance according to the desired wavelength band is read from the target generation unit 29. The target spectrogram $TargetSG_0(\omega,t)$ is roughly equivalent to a target temporal waveform (temporal intensity waveform and frequency components constituting it), and is generated in a target spectrogram function of a process number (5-b).

Next, the waveform function modification unit 27 of the phase spectrum design unit 22 performs pattern matching between the spectrogram $SG_{0,k}(\omega,t)$ and the target spectrogram $TargetSG_0(\omega,t)$ to check a similarity degree (matching degree). In the present embodiment, an evaluation value is calculated as an index representing the similarity degree.

Then, in a subsequent process number (5-c), it is determined whether or not the obtained evaluation value satisfies a predetermined end condition. When the condition is satisfied, the process proceeds to a process number (6), and when the condition is not satisfied, the process proceeds to a process number (5-d). In the process number (5-d), the temporal phase waveform function $\phi_0(t)$ included in the second waveform function is changed to an arbitrary temporal phase waveform function $\phi_{0,k}(t)$. The second waveform function after changing the temporal phase waveform function is again transformed into a spectrogram by the time-frequency transform such as STFT.

Subsequently, the above process numbers (5-a) to (5-d) are repeatedly performed. In this way, the second waveform function is modified so as to bring the spectrogram $SG_{0,k}(\omega,t)$ gradually close to the target spectrogram $TargetSG_0(\omega,t)$ (waveform function modification step).

Thereafter, the inverse Fourier transform unit 28 of the phase spectrum design unit 22 performs the inverse Fourier transform on the second waveform function after the modification (arrow A4 in the drawing) to generate a third waveform function (k) in the frequency domain (inverse Fourier transform step, process number (6)).

[Formula 11]

$$\sqrt{B_{0,k}(\omega)}\exp\{i\Phi_{0,k}(\omega)\} \quad \cdot \cdot \cdot \quad (\mathrm{k})$$

A phase spectrum function $\Phi_{0,k}(\omega)$ included in the third waveform function (k) becomes a desired phase spectrum function $\Phi_{TWC\text{-}TFD}(\omega)$ to be finally obtained. The phase spectrum function $\Phi_{TWC\text{-}TFD}(\omega)$ is provided to the modulation pattern generation unit 24.

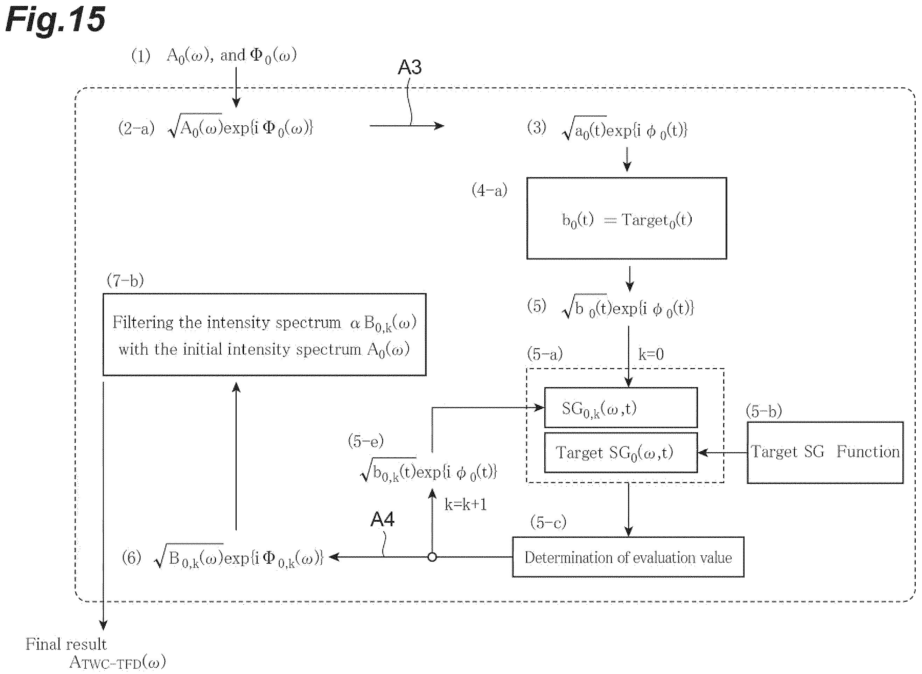

FIG. 15 is a diagram illustrating a calculation procedure of the spectrum intensity in the intensity spectrum design unit 23. In addition, since the process number (1) to the process number (5-c) are the same as the above-described calculation procedure of the spectrum phase in the phase spectrum design unit 22, the description thereof will be omitted.

When the evaluation value indicating the similarity degree between the spectrogram $SG_{0,k}(\omega,t)$ and the target spectrogram $TargetSG_0(\omega,t)$ does not satisfy the predetermined end condition, the waveform function modification unit 27 of the intensity spectrum design unit 23 changes the temporal intensity waveform function $b_0(t)$ to the arbitrary temporal intensity waveform function $b_{0,k}(t)$ while constraining the temporal phase waveform function $\phi_0(t)$ included in the second waveform function by the initial value (process number (5-e)). The second waveform function after changing the temporal intensity waveform function is transformed again into a spectrogram by the time-frequency transform such as STFT.

Subsequently, the process numbers (5-a) to (5-c) are repeatedly performed. In this way, the second waveform function is modified so as to bring the spectrogram $SG_{0,k}(\omega,t)$ gradually close to the target spectrogram $TargetSG_0(\omega,t)$ (waveform function modification step).

Thereafter, the inverse Fourier transform unit 28 of the intensity spectrum design unit 23 performs the inverse Fourier transform on the second waveform function after the modification (arrow A4 in the drawing) to generate a third waveform function (m) in the frequency domain (inverse Fourier transform step, process number (6)).

[Formula 12]

$$\sqrt{B_{0,k}(\omega)}\exp\{i\Phi_{0,k}(\omega)\} \quad \cdot \cdot \cdot \quad (\mathrm{m})$$

Next, in a process number (7-b), a filter processing unit of the intensity spectrum design unit 23 performs filter processing based on the intensity spectrum of the input light on the intensity spectrum function $B_{0,k}(\omega)$ included in the third waveform function (m) (filter processing step). Specifically, a portion exceeding a cutoff intensity for each wavelength, which is determined on the basis of the intensity spectrum of the input light, is cut from the intensity spectrum obtained by multiplying the intensity spectrum function $B_{0,k}(\omega)$ by a coefficient $\alpha$. This is because the intensity spectrum function $\alpha B_{0,k}(\omega)$ is required to be prevented from exceeding the spectrum intensity of the input light in all wavelength regions.

In one example, the cutoff intensity for each wavelength is set to be matched with the intensity spectrum of the input light (initial intensity spectrum function $A_0(\omega)$ in the present embodiment). In this case, as shown in the following Formula (n), at a frequency where the intensity spectrum function $\alpha B_{0,k}(\omega)$ is larger than the intensity spectrum function $A_0(\omega)$, a value of the intensity spectrum function $A_0(\omega)$ is taken as the value of the intensity spectrum function $A_{TWC\text{-}TFD}(\omega)$. Further, at a frequency where the intensity spectrum function $\alpha B_{0,k}(\omega)$ is equal to or smaller than the intensity spectrum function $A_0(\omega)$, a value of the intensity spectrum function $\alpha B_{0,k}(\omega)$ is taken as the value of the intensity spectrum function $A_{TWC\text{-}TFD}(\omega)$ (process number (7-b) in the drawing).

[Formula 13]

$$A_{TWC\text{-}TFD}(\omega) = \begin{cases} A_0(\omega) & A_0(\omega) < \alpha B_{0,k}(\omega) \\ \alpha B_{0,k}(\omega) & A_0(\omega) \geq \alpha B_{0,k}(\omega) \end{cases} \quad \cdots \quad (\,n\,)$$

The intensity spectrum function $A_{TWC\text{-}TFD}(\omega)$ is provided to the modulation pattern generation unit 24 as a desired spectrum intensity to be finally obtained.

The modulation pattern generation unit 24 calculates a phase modulation pattern (for example, a computer-generated hologram) to give the spectrum phase indicated by the phase spectrum function $\Phi_{TWC\text{-}TFD}(\omega)$ calculated in the phase spectrum design unit 22 and the spectrum intensity indicated by the intensity spectrum function $A_{TWC\text{-}TFD}(\omega)$ calculated in the intensity spectrum design unit 23 to the output light (data generation step).

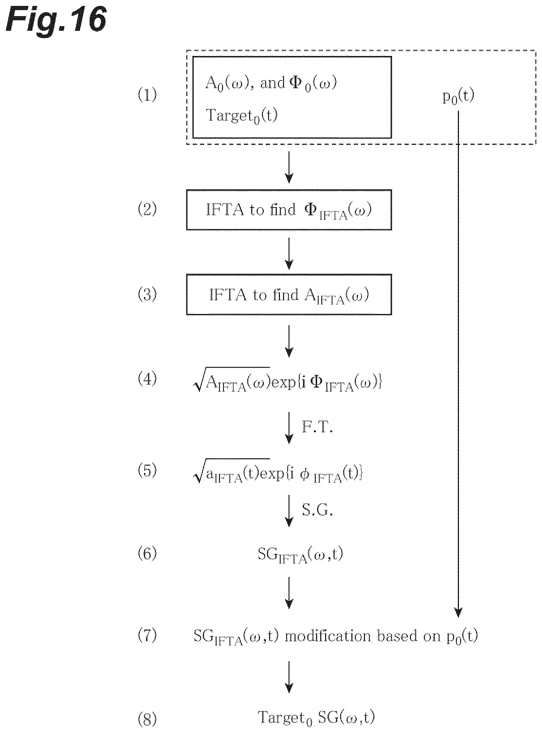

FIG. 16 is a diagram illustrating an example of a generation procedure of the target spectrogram $TargetSG_0(\omega,t)$ in the target generation unit 29. Since the target spectrogram $TargetSG_0(\omega,t)$ indicates a target temporal waveform (temporal intensity waveform and frequency component (wavelength band component) constituting it), the creation of the target spectrogram is a very important process for controlling the frequency component (wavelength band component).

As illustrated in FIG. 16, the target generation unit 29 first inputs the spectrum waveform (the initial intensity spectrum function $A_0(\omega)$ and the initial phase spectrum function $\Phi_0(\omega)$) and the desired temporal intensity waveform function $Target_0(t)$. Further, a temporal function $p_0(t)$ including desired frequency (wavelength) band information is input (process number (1)).

Next, the target generation unit 29 uses, for example, the iterative Fourier transform method illustrated in FIG. 13 to calculate a phase spectrum function $\Phi_{IFTA}(\omega)$ for realizing the temporal intensity waveform function $Target_0(t)$ (process number (2)).

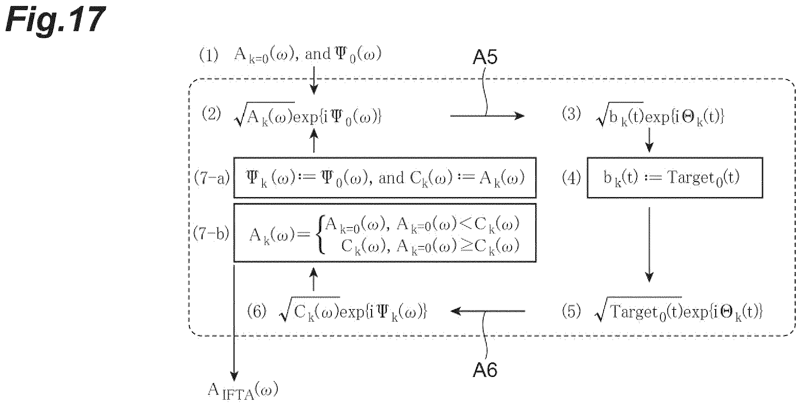

Next, the target generation unit 29 calculates an intensity spectrum function $A_{IFTA}(\omega)$ for realizing the temporal intensity waveform function $Target_0(t)$, by the iterative Fourier transform method using the above obtained phase spectrum function $\Phi_{IFTA}(\omega)$ (process number (3)). FIG. 17 is a diagram illustrating an example of a calculation procedure of the intensity spectrum function $A_{IFTA}(\omega)$.

First, the initial intensity spectrum function $A_{k=0}(\omega)$ and the phase spectrum function $\Psi_0(\omega)$ are prepared (process number (1) in the drawing). Next, a waveform function (o) in the frequency domain including the intensity spectrum function $A_k(\omega)$ and the phase spectrum function $\Psi_0(\omega)$ is prepared (process number (2) in the drawing).

[Formula 14]

$$\sqrt{A_k(\omega)}\exp\{i\Psi_0(\omega)\} \quad \cdots \quad (\,o\,)$$

A subscript k represents after a k-th Fourier transform process. Before the first Fourier transform process, the initial intensity spectrum function $A_{k=0}(\omega)$ described above is used as the intensity spectrum function $A_k(\omega)$. i is an imaginary number.

Next, a Fourier transform from the frequency domain to the time domain is performed on the function (o) (arrow A5 in the drawing). As a result, a waveform function (p) in the frequency domain including a temporal intensity waveform function $b_k(t)$ is obtained (process number (3) in the drawing).

[Formula 15]

$$\sqrt{b_k(t)}\exp\{i\Theta_k(t)\} \quad \cdots \quad (\,p\,)$$

Next, the temporal intensity waveform function $b_k(t)$ included in the function (p) is replaced by the temporal intensity waveform function $Target_0(t)$ based on the desired waveform (process numbers (4) and (5) in the drawing).

[Formula 16]

$$b_k(t) := Target_0(t) \quad \cdots \quad (\,q\,)$$

[Formula 17]

$$\sqrt{Target_0(t)}\exp\{i\Theta_k(t)\} \quad \cdots \quad (\,r\,)$$

Next, an inverse Fourier transform from the time domain to the frequency domain is performed on the function (r) (arrow A6 in the drawing). As a result, a waveform function (s) in the frequency domain including an intensity spectrum function $C_k(\omega)$ and a phase spectrum function $\Psi_k(\omega)$ is obtained (process number (6) in the drawing).
[Formula 18]

$$\sqrt{C_k(\omega)}\exp\{i\Psi_k(\omega)\} \quad \cdot \cdot \cdot \quad (s)$$

Next, to constrain the phase spectrum function $\Psi_k(\omega)$ included in the function (s), it is replaced by the initial phase spectrum function $\Psi_0(\omega)$ (process number (7-a) in the drawing).
[Formula 19]

$$\Psi_k(\omega) := \Psi_0(\omega) \quad \cdot \cdot \cdot \quad (t)$$

Further, filter processing based on the intensity spectrum of the input light is performed on the intensity spectrum function $C_k(\omega)$ in the frequency domain after the inverse Fourier transform. Specifically, a portion exceeding a cutoff intensity for each wavelength, which is determined on the basis of the intensity spectrum of the input light, is cut from the intensity spectrum represented by the intensity spectrum function $C_k(\omega)$.

In one example, the cutoff intensity for each wavelength is set to be matched with the intensity spectrum (for example, the initial intensity spectrum function $A_{k=0}(\omega)$) of the input light. In this case, as shown in the following Formula (u), at a frequency where the intensity spectrum function $C_k(\omega)$ is larger than the intensity spectrum function $A_{k=0}(\omega)$, a value of the intensity spectrum function $A_{k=0}(\omega)$ is taken as the value of the intensity spectrum function $A_k(\omega)$. Further, at a frequency where the intensity spectrum function $C_k(\omega)$ is equal to or smaller than the intensity spectrum function $A_{k=0}(\omega)$, a value of the intensity spectrum function $C_k(\omega)$ is taken as the value of the intensity spectrum function $A_k(\omega)$ (process number (7-b) in the drawing).
[Formula 20]

$$A_k(\omega) = \begin{cases} A_{k=0}(\omega), & A_{k=0}(\omega) < C_k(\omega) \\ C_k(\omega), & A_{k=0}(\omega) \geq C_k(\omega) \end{cases} \quad \cdot \cdot \cdot \quad (u)$$

The intensity spectrum function $C_k(\omega)$ included in the function (s) is replaced by the intensity spectrum function $A_k(\omega)$ after the filter processing by the above Formula (u).

Subsequently, the above processes (2) to (7-b) are repeatedly performed, so that the intensity spectrum shape represented by the intensity spectrum function $A_k(\omega)$ in the waveform function can be brought close to the intensity spectrum shape corresponding to the desired temporal intensity waveform. Finally, an intensity spectrum function $A_{IFTA}(\omega)$ is obtained.

Referring again to FIG. 16. By calculating the phase spectrum function $\Phi_{IFTA}(\omega)$ and the intensity spectrum function $A_{IFTA}(\omega)$ in the process numbers (2) and (3) described above, a third waveform function (v) in the frequency domain including these functions is obtained (process number (4)).
[Formula 21]

$$\sqrt{A_{IFTA}(\omega)}\exp\{i\Phi_{IFTA}(\omega)\} \quad \cdot \cdot \cdot \quad (v)$$

The Fourier transform unit 29a of the target generation unit 29 performs the Fourier transform on the above waveform function (v). As a result, a fourth waveform function (w) in the time domain is obtained (process number (5)).
[Formula 22]

$$\sqrt{a_{IFTA}(t)}\exp\{i\varphi_{IFTA}(t)\} \quad \cdot \cdot \cdot \quad (w)$$

The spectrogram modification unit 29b of the target generation unit 29 transforms the fourth waveform function (w) into a spectrogram $SG_{IFTA}(\omega,t)$ by the time-frequency transform (process number (6)). Then, in a process number (7), the spectrogram $SG_{IFTA}(\omega,t)$ is modified on the basis of the temporal function $p_0(t)$ including the desired frequency (wavelength) band information, so that the target spectrogram $TargetSG_0(\omega,t)$ is generated. For example, a characteristic pattern appearing in the spectrogram $SG_{IFTA}(\omega,t)$ constituted by two-dimensional data is partially cut out, and the frequency component of the corresponding portion is operated on the basis of the temporal function $p_0(t)$. A specific example thereof will be described in detail below.

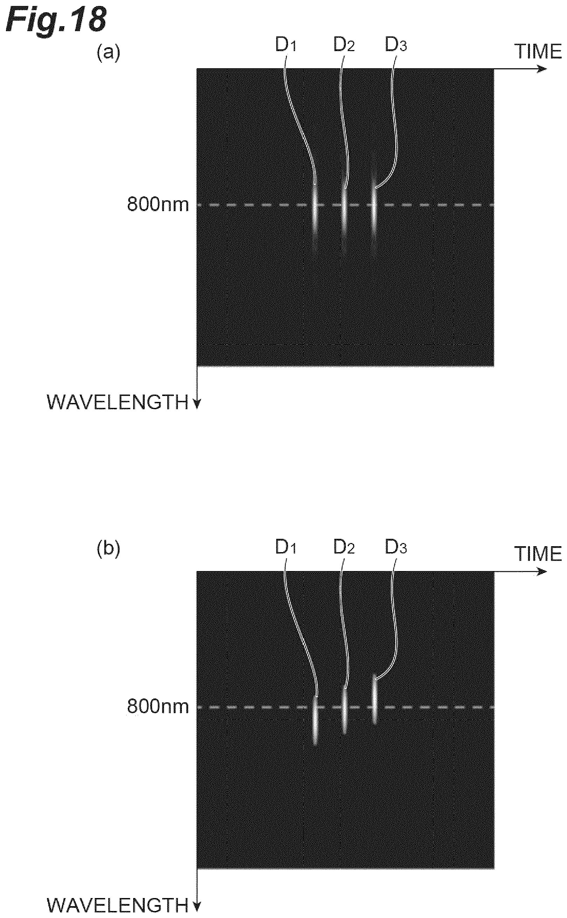

For example, the case where triple pulses having time intervals of 2 picoseconds are set as the desired temporal intensity waveform function $Target_0(t)$ is considered. At this time, the spectrogram $SG_{IFTA}(\omega,t)$ has a result as shown in (a) in FIG. 18. In addition, in (a) in FIG. 18, the horizontal axis indicates the time (unit: femtosecond), and the vertical axis indicates the wavelength (unit: nm). Further, a value of the spectrogram is indicated by light and dark in the drawing, and the value of the spectrogram is larger when the brightness is larger. In the spectrogram $SG_{IFTA}(\omega,t)$, the triple pulses appear as domains $D_1$, $D_2$, and $D_3$ divided on the time axis at intervals of 2 picoseconds. A center (peak) wavelength of the domains $D_1$, $D_2$, and $D_3$ is 800 nm.

When it is desired to control only the temporal intensity waveform of the output light (it is simply desired to obtain triple pulses), it is not necessary to operate these domains $D_1$, $D_2$, and $D_3$. However, when it is desired to control the frequency (wavelength) band of each pulse, it is necessary to operate these domains $D_1$, $D_2$, and $D_3$. That is, as shown in (b) in FIG. 18, moving the respective domains $D_1$, $D_2$, and $D_3$ independently in the direction along the wavelength axis (vertical axis) means changing the constituent frequency (wavelength band) of each pulse. The change of the constituent frequency (wavelength band) of each pulse is performed on the basis of the temporal function $p_0(t)$.

For example, when the temporal function $p_0(t)$ is described so that the peak wavelength of the domain $D_2$ is fixed at 800 nm and the peak wavelengths of the domains $D_1$ and $D_3$ are moved in parallel by -2 nm and +2 nm, respectively, the spectrogram $SG_{IFTA}(\omega,t)$ changes to the target spectrogram $TargetSG_0(\omega,t)$ shown in (b) in FIG. 18. For example, by performing such processing on the spectrogram, it is possible to create a target spectrogram in which the constituent frequency (wavelength band) of each pulse is arbitrarily controlled without changing the shape of the temporal intensity waveform.

Effects obtained by the dispersion measurement apparatus 1A and the dispersion measurement method of the present embodiment described above will be described.

In the dispersion measurement apparatus 1A and the dispersion measurement method of the present embodiment, in the pulse forming unit 3 (pulse forming step S11), the light pulse train Pb including the plurality of light pulses $Pb_1$ to $Pb_3$ having time differences and center wavelengths different from each other is generated from the light pulse Pa output from the pulsed laser light source 2. Further, the light pulse train Pb passes through the measurement object B.

In this case, as described above, various feature values (for example, peak intensities $PE_1$ to $PE_3$, full widths at half maximum $W_1$ to $W_3$, peak time intervals $G_{1,2}$, $G_{2,3}$, and the like) in the temporal waveform of the light pulse train Pb change due to the wavelength dispersion in the measurement object B. That is, the various feature values in the temporal waveform of the light pulse train Pc after passing through the measurement object B have the correlation with the wavelength dispersion amount in the measurement object B.

According to the dispersion measurement apparatus 1A and the dispersion measurement method of the present embodiment, the image sensor 51 capable of performing imaging at the imaging interval shorter than the minimum peak interval of the light pulse train Pb is used, and the imaging data is generated by imaging the light pulse train Pc passed through the measurement object B. Further, the imaging data is received, the temporal waveform of the light pulse train Pb is detected for each pixel of the image sensor 51, and the wavelength dispersion amount of the measurement object B is estimated for each pixel of the image sensor 51 based on the feature value of the temporal waveform.

Therefore, according to the above configuration, the wavelength dispersion distribution in the measurement object B can be estimated at one time. In addition, according to the dispersion measurement apparatus 1A and the dispersion measurement method of the present embodiment, unlike the measurement technique described in Patent Document 1 and Non Patent Document 1, it is not necessary to measure the emission spectrum, and thus, the optical system in the imaging unit 5 (imaging step S13) can be simplified, and the wavelength dispersion distribution in the measurement object B can be measured by a simple configuration.

As in the present embodiment, the operation unit 6 (operation step S14) may calculate the two-dimensional distribution of at least one value of the refractive index, the reflectance, the absorptance, and the thickness of the measurement object B based on the two-dimensional distribution of the estimated wavelength dispersion amount. In this case, the optical property of the measurement object B, the outer shape, or the two-dimensional distributions of these can be measured in a short time.

As in the present embodiment, the operation unit 6 (operation step S14) may obtain the wavelength dispersion amount of the light pulse Pa based on the peak time intervals $G_{1,2}$ and $G_{2,3}$ of the light pulse train Pb. As shown in examples described below, the present inventors have found that, in the various feature values in the temporal waveform, in particular, the peak time intervals $G_{1,2}$ and $G_{2,3}$ have the significant correlation with the wavelength dispersion amount of the measurement object B. Therefore, by estimating the wavelength dispersion amount of the light pulse Pa based on the peak time intervals $G_{1,2}$ and $G_{2,3}$ of the light pulse train Pb, the distribution of the wavelength dispersion in the measurement object B can be estimated with higher accuracy.

As illustrated in FIG. 2, the pulse forming unit 3 may include the diffraction grating 12 for spatially separating the plurality of wavelength components included in the light pulse Pa for each wavelength, the SLM 14 for shifting the phases of the plurality of wavelength components output from the diffraction grating 12 from each other, and the lens 15 for focusing the plurality of wavelength components output from the SLM 14. Similarly, in the pulse forming step S11, the plurality of wavelength components included in the light pulse Pa may be spatially separated for each wavelength, the phases of the plurality of wavelength components may be shifted from each other using the SLM 14, and the plurality of wavelength components may be focused. In this case, it is possible to easily form the light pulse train Pb including the plurality of light pulses $Pb_1$ to $Pb_3$ having time differences and center wavelengths different from each other.

As in the present embodiment, the operation unit 6 (operation step S14) may compare the feature value of the temporal waveform of the light pulse train Pc calculated in advance on the assumption that the wavelength dispersion of the measurement object B is zero and the feature value of the detected temporal waveform of the light pulse train Pc to obtain the wavelength dispersion amount of the light pulse Pa. In this case, the wavelength dispersion distribution of the measurement object B can be estimated with higher accuracy.

(Example)

As an example of the above embodiment, the present inventors performed simulations by numerical calculations. As the light pulse Pa, a single pulse having a bandwidth of 10 nm and a center wavelength of 1030 nm was assumed. For converting the light pulse Pa into the light pulse train Pb including the three light pulses $Pb_1$ to $Pb_3$ shown in FIG. 4, the modulation pattern to be presented on the SLM 14 was calculated using the method described in the above embodiment. At this time, the peak time intervals $G_{1,2}$ and $G_{2,3}$ were set to 2000 fs, and the center wavelengths were set to 1025 nm, 1030 nm, and 1035 nm, respectively.

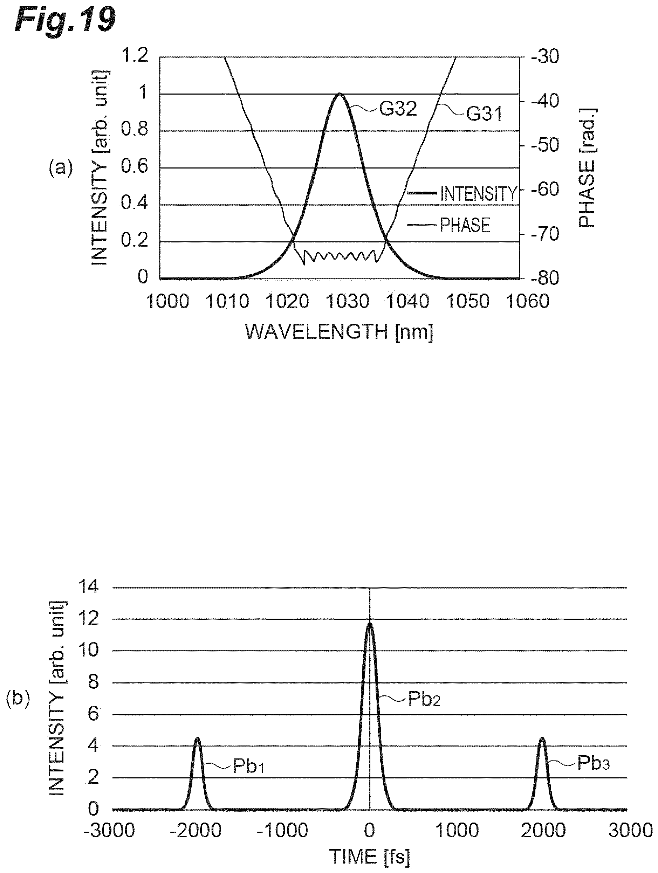

(a) in FIG. 19 is a graph showing the calculated modulation pattern. In this diagram, the horizontal axis indicates the wavelength (unit: nm), the left vertical axis indicates the light intensity (arb. unit), and the right vertical axis indicates the phase (rad). Further, a graph G31 in the diagram shows the modulation pattern of the spectrum phase, and a graph G32 in the diagram shows the modulation pattern of the spectrum intensity.

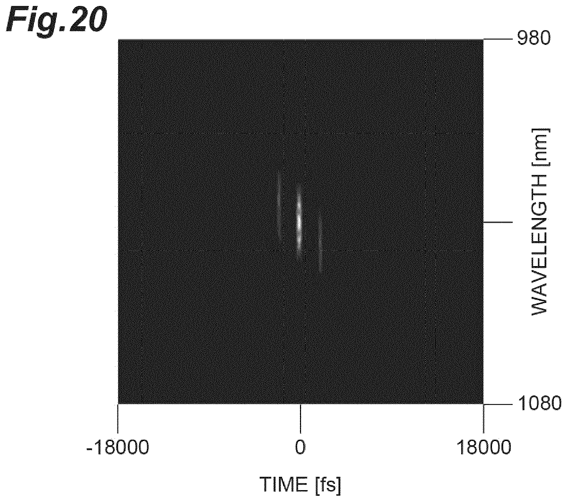

(b) in FIG. 19 is a graph showing the temporal waveform of the light pulse train Pb generated by the present simulation. FIG. 20 is a spectrogram of the light pulse train Pb generated by the present simulation. In (b) in FIG. 19, the horizontal axis indicates the time (unit: fs), and the vertical axis indicates the light intensity (arb. unit). Further, in FIG. 20, the horizontal axis indicates the time, the vertical axis indicates the wavelength, and the light intensity is represented by light and shade of color. As shown in these diagrams, the light pulse train Pb including the three light pulses $Pb_1$ to $Pb_3$ having time differences and center wavelengths different from each other was obtained.

Further, in the present simulation, for comparison, for converting the light pulse Pa into the light pulse train Pd including the three light pulses $Pd_1$ to $Pd_3$ shown in FIG. 5, the modulation pattern to be presented on the SLM 14 was calculated by using the method described in the above embodiment. The peak time intervals were set to be the same as those of the light pulses $Pb_1$ to $Pb_3$, and the center wavelength of each of the light pulses $Pd_1$ to $Pd_3$ was set to 1030 nm.

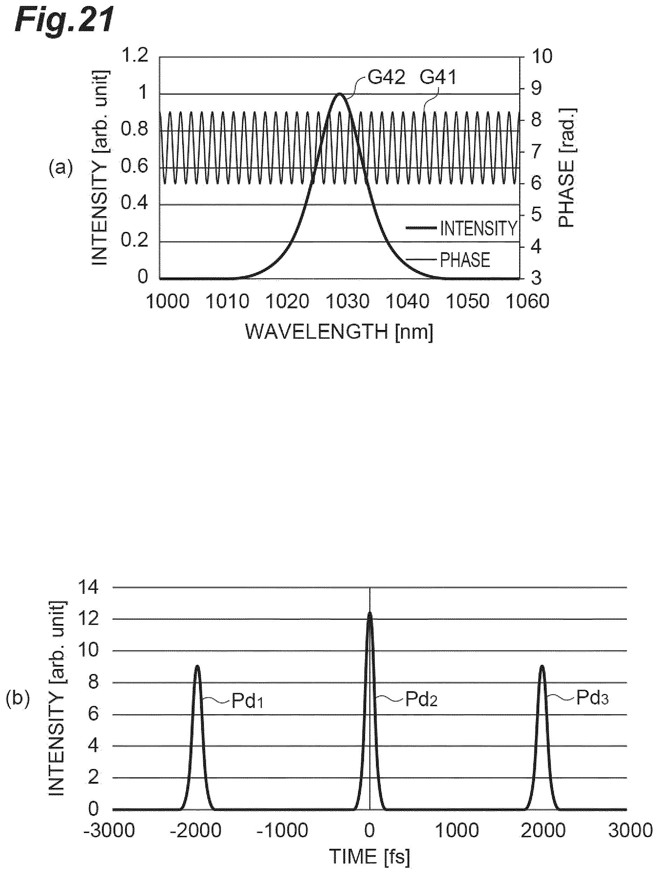

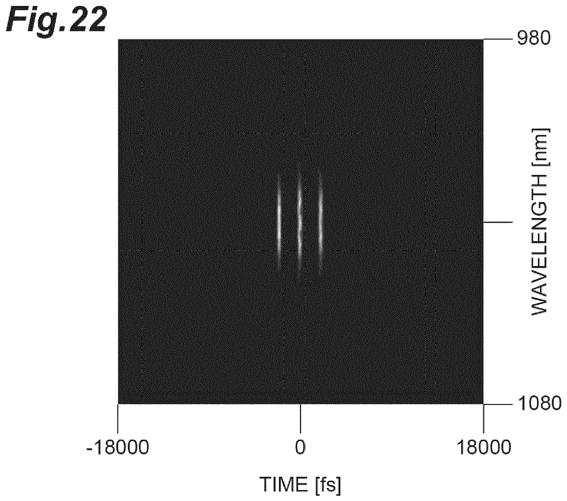

(a) in FIG. 21 is a graph showing the calculated modulation pattern. A graph G41 in the diagram shows the modulation pattern of the spectrum phase, and a graph G42 in the diagram shows the modulation pattern of the spectrum intensity. (b) in FIG. 21 is a graph showing the temporal waveform of the light pulse train Pd generated by the present simulation. FIG. 22 is a spectrogram of the light pulse train Pd generated by the present simulation. As shown in these diagrams, the light pulse train Pd including the three light pulses $Pd_1$ to $Pd_3$ having time differences and center wavelengths equal to each other was obtained.

[Change in feature value of pulse train due to second-order dispersion]

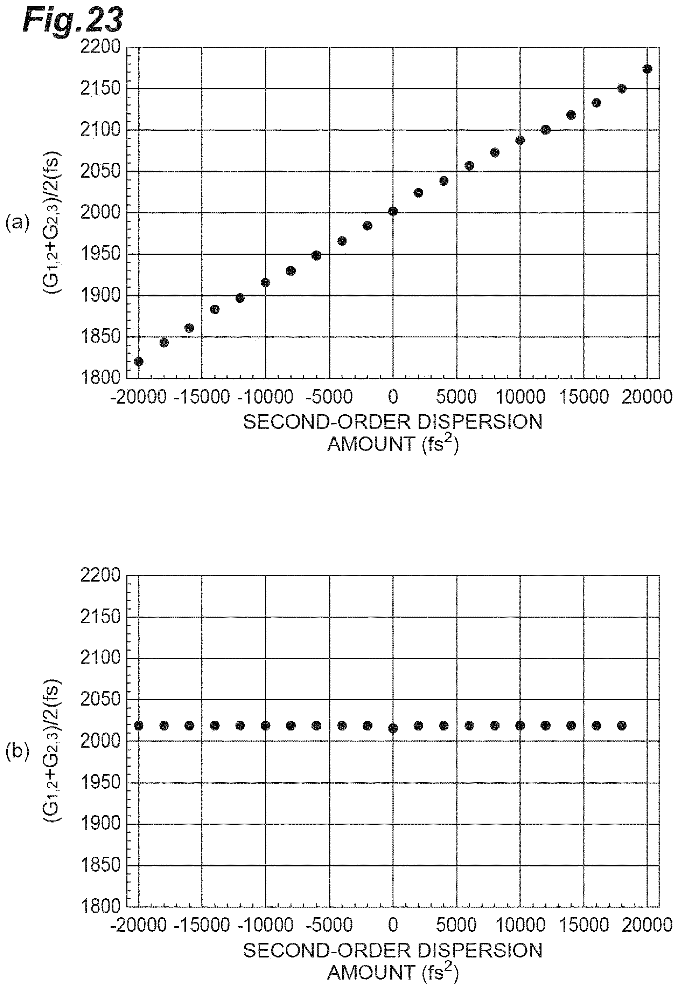

In order to examine the influence of the second-order dispersion of the measurement object B on the feature value of the pulse train, changes of the temporal waveforms of the light pulse trains Pb and Pd were examined by simulatively changing the second-order dispersion amount of the light pulse Pa. (a) in FIG. 23 and (b) in FIG. 23 are graphs plotting the relationship between the second-order dispersion amount of the light pulse Pa and the average value $(G_{1,2} + G_{2,3}) / 2$ of the peak time intervals $G_{1,2}$ and $G_{2,3}$.

(a) in FIG. 23 shows the case of the light pulse train Pb in which the center wavelengths of the respective pulses are different, and (b) in FIG. 23 shows the case of the light pulse train Pd in which the center wavelengths of the respective pulses are equal. In these diagrams, the horizontal axis indicates the second-order dispersion amount of the light pulse Pa (unit: $fs^2$), and the vertical axis indicates the average value of the peak time intervals $G_{1,2}$, $G_{2,3}$ (unit: fs).

Referring to (a) in FIG. 23, in the case of the light pulse train Pb in which the center wavelengths of the respective pulses are different, it can be seen that the average value of the peak time intervals $G_{1,2}$, $G_{2,3}$ monotonously (substantially linearly) increases or decreases with the increase or decrease of the second-order dispersion amount. When the data is examined in more detail, it is confirmed that the peak times of the left and right light pulses $Pb_1$ and $Pb_3$ tend to move symmetrically with respect to the peak time of the center light pulse $Pb_2$ according to the dispersion amount. In this example, an increase (or decrease) of 50 fs of the peak time intervals $G_{1,2}$, $G_{2,3}$ corresponds to an increase (or decrease) of the second-order dispersion amount of 5000 $fs^2$.

On the other hand, referring to (b) in FIG. 23, in the case of the light pulse train Pd in which the center wavelengths of the respective pulses are equal, it can be seen that the average value of the peak time intervals $G_{1,2}$, $G_{2,3}$ is substantially constant regardless of the increase or decrease of the second-order dispersion amount. From this, it can be seen that the second-order dispersion amount of the measurement object B can be accurately and easily estimated based on the peak time intervals $G_{1,2}$, $G_{2,3}$ of the light pulse train Pb in which the center wavelengths of the respective pulses are different.

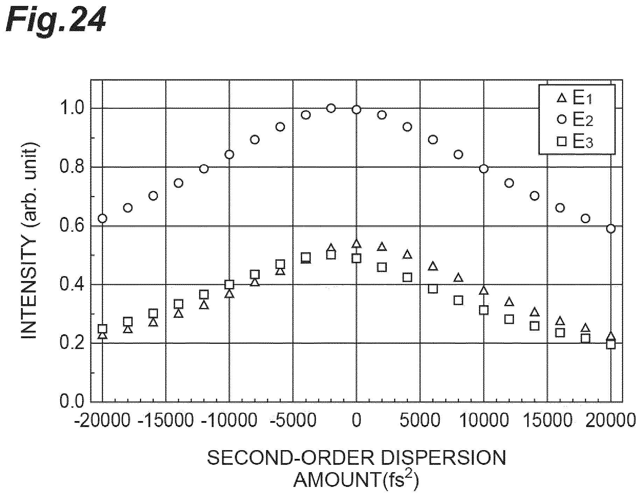

FIG. 24 is a graph plotting the relationship between the second-order dispersion amount of the light pulse Pa and the peak intensities $E_1$ to $E_3$, and shows the case of the light pulse train Pb in which the center wavelengths of the respective pulses are different. Triangular plots show the peak intensity $E_1$, circular plots show the peak intensity $E_2$, and square plots show the peak intensity $E_3$. In this diagram, the horizontal axis indicates the second-order dispersion amount of the light pulse Pa (unit: $fs^2$), and the vertical axis indicates the peak intensity (arb. unit).

Referring to FIG. 24, in the light pulse train Pb in which the center wavelengths of the respective pulses are different, it can be seen that the peak intensities $E_1$ to $E_3$ also increase or decrease as the second-order dispersion amount increases or decreases. From this, it can be seen that the second-order dispersion amount of the measurement object B can be accurately and easily estimated based on the peak intensities $E_1$ to $E_3$ of the light pulse train Pb in which the center wavelengths of the respective pulses are different.

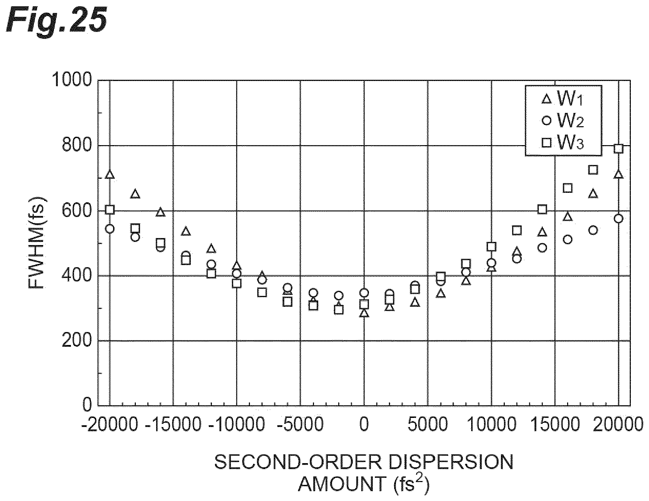

FIG. 25 is a graph plotting the relationship between the second-order dispersion amount of the light pulse Pa and the full widths at half maximum $W_1$ to $W_3$, and shows the case of the light pulse train Pb in which the center wavelengths of the respective pulses are different. Triangular plots show the full width at half maximum $W_1$, circular plots show the full width at half maximum $W_2$, and square plots show the full width at half maximum $W_3$. In this diagram, the horizontal axis indicates the second-order dispersion amount of the light pulse Pa (unit: $fs^2$), and the vertical axis indicates the full width at half maximum (unit: fs).

Referring to FIG. 25, in the light pulse train Pb in which the center wavelengths of the respective pulses are different, it can be seen that the full widths at half maximum $W_1$ to $W_3$ also increase or decrease as the second-order dispersion amount increases or decreases. From this, it can be seen that the second-order dispersion amount of the measurement object B can be accurately and easily estimated based on the full widths at half maximum $W_1$ to $W_3$ of the light pulse train Pb in which the center wavelengths of the respective pulses are different.

[Change in feature value of pulse train due to third-order dispersion]

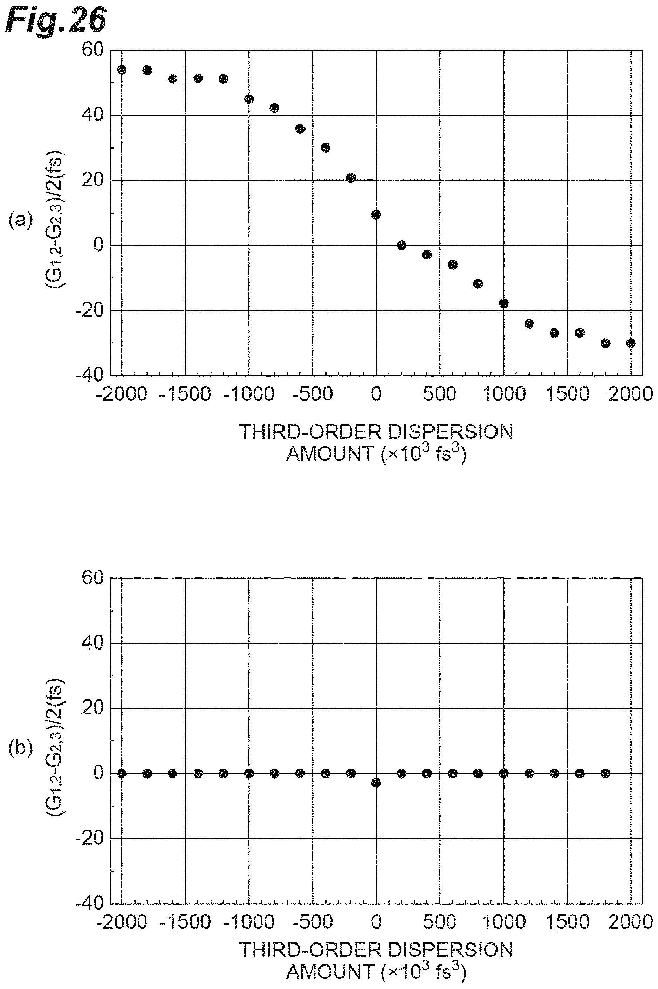

In order to examine the influence of the third-order dispersion of the measurement object B on the feature value of the pulse train, changes of the temporal waveforms of the light pulse trains Pb and Pd were examined by simulatively changing the third-order dispersion amount of the light pulse Pa. (a) in FIG. 26 and (b) in FIG. 26 are graphs plotting the relationship between the third-order dispersion amount of the light pulse Pa and the difference $(G_{1,2} - G_{2,3})/2$ of the peak time intervals $G_{1,2}$, $G_{2,3}$.

(a) in FIG. 26 shows the case of the light pulse train Pb in which the center wavelengths of the respective pulses are different, and (b) in FIG. 26 shows the case of the light pulse train Pd in which the center wavelengths of the respective pulses are equal. In these diagrams, the horizontal axis indicates the third-order dispersion amount of the light pulse Pa (unit: $fs^3$), and the vertical axis indicates the difference between the peak time intervals $G_{1,2}$, $G_{2,3}$ (unit: fs).

Referring to (a) in FIG. 26, in the case of the light pulse train Pb in which the center wavelengths of the respective pulses are different, it can be seen that the difference between the peak time intervals $G_{1,2}$, $G_{2,3}$ monotonously increases or decreases with the increase or decrease of the third-order dispersion amount.

On the other hand, referring to (b) in FIG. 26, in the case of the light pulse train Pd in which the center wavelengths of the respective pulses are equal, it can be seen that the difference between the peak time intervals $G_{1,2}$, $G_{2,3}$ is substantially constant regardless of the increase or decrease of the third-order dispersion amount. From this, it can be seen that the third-order dispersion amount of the measurement object B can be accurately and easily estimated based on the peak time intervals $G_{1,2}$, $G_{2,3}$ of the light pulse train Pb in which the center wavelengths of the respective pulses are different.

When the data is examined in more detail, in the case of the light pulse train Pb in which the center wavelengths of the respective pulses are different, it is confirmed that the peak times of the left and right light pulses $Pb_1$ and $Pb_3$ tend to move asymmetrically with respect to the peak time of the center light pulse $Pb_2$ according to the dispersion amount. Such a feature is different from the case of the second-order dispersion amount, and it is possible to distinguish the dispersion order based on the difference, that is, the tendency of the relative change of the peak time intervals $G_{1,2}$ and $G_{2,3}$.

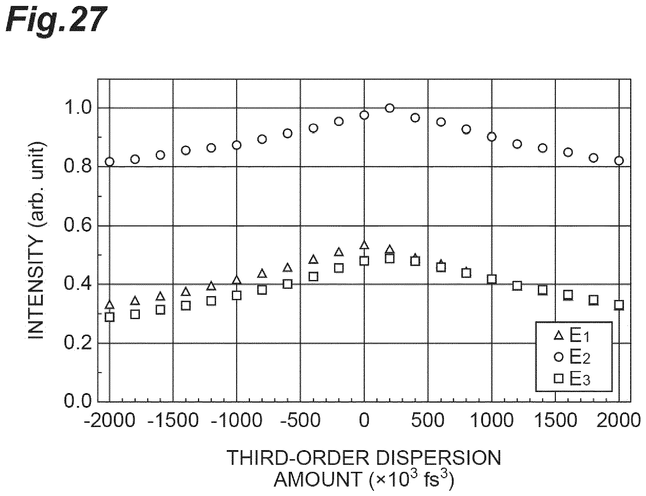

FIG. 27 is a graph plotting the relationship between the third-order dispersion amount of the light pulse Pa and the peak intensities $E_1$ to $E_3$, and shows the case of the light pulse train Pb in which the center wavelengths of the respective pulses are different. Triangular plots show the peak intensity $E_1$, circular plots show the peak intensity $E_2$, and square plots show the peak intensity $E_3$. In this diagram, the horizontal axis indicates the third-order dispersion amount of the light pulse

Pa (unit: fs$^3$), and the vertical axis indicates the peak intensity (arb. unit).

Referring to FIG. 27, in the light pulse train Pb in which the center wavelengths of the respective pulses are different, it can be seen that the peak intensities E$_1$ to E$_3$ also increase or decrease as the third-order dispersion amount increases or decreases. From this, it can be seen that the third-order dispersion amount of the measurement object B can be accurately and easily estimated based on the peak intensities E$_1$ to E$_3$ of the light pulse train Pb in which the center wavelengths of the respective pulses are different.

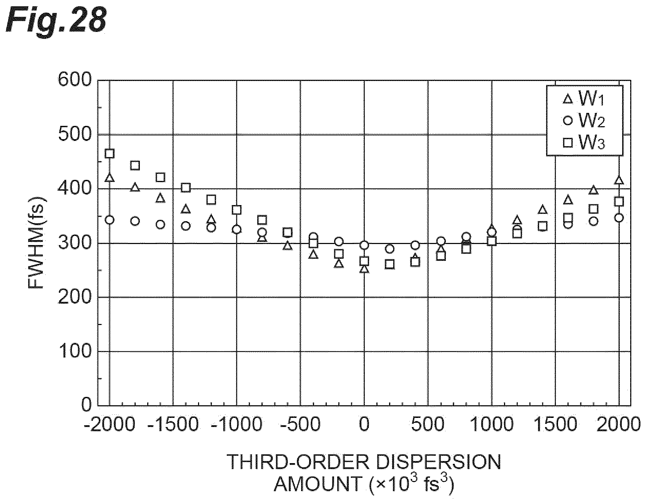

FIG. 28 is a graph plotting the relationship between the third-order dispersion amount of the light pulse Pa and the full widths at half maximum W$_1$ to W$_3$, and shows the case of the light pulse train Pb in which the center wavelengths of the respective pulses are different. Triangular plots show the full width at half maximum W$_1$, circular plots show the full width at half maximum W$_2$, and square plots show the full width at half maximum W$_3$. In this diagram, the horizontal axis indicates the third-order dispersion amount of the light pulse Pa (unit: fs$^3$), and the vertical axis indicates the full width at half maximum (unit: fs).

Referring to FIG. 28, in the light pulse train Pb in which the center wavelengths of the respective pulses are different, it can be seen that the full widths at half maximum W$_1$ to W$_3$ also increase or decrease as the third-order dispersion amount increases or decreases. From this, it can be seen that the third-order dispersion amount of the measurement object B can be accurately and easily estimated based on the full widths at half maximum W$_1$ to W$_3$ of the light pulse train Pb in which the center wavelengths of the respective pulses are different.

(First Modification)

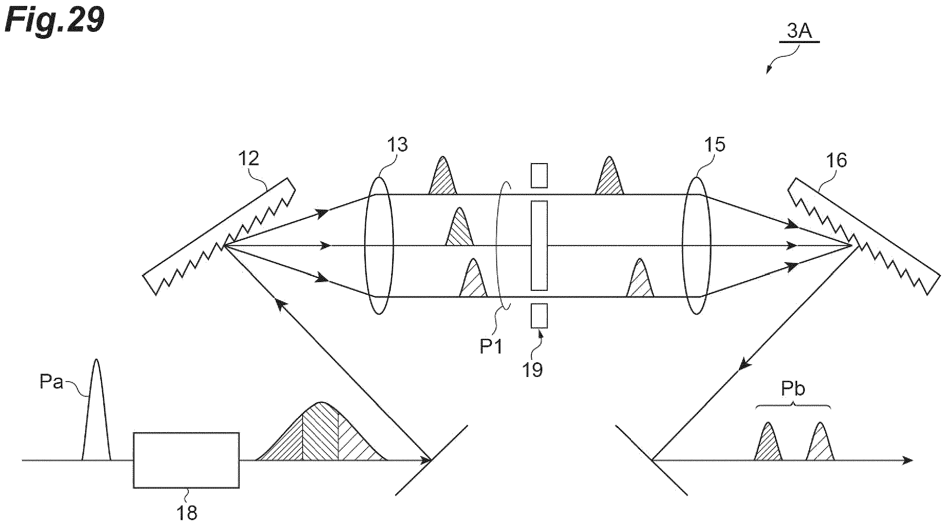

FIG. 29 is a diagram illustrating a configuration of a pulse forming unit 3A as a first modification of the above embodiment. The pulse forming unit 3A includes a pulse stretcher 18, and further, a filter 19 instead of the SLM 14 (see FIG. 2). The pulse stretcher 18 is provided on an optical path between the pulsed laser light source 2 and the diffraction grating 12, and expands the pulse width of the light pulse Pa. Examples of the pulse stretcher 18 include a glass block, a diffraction grating pair, and a prism pair.

The filter 19 is a light intensity filter, and is optically coupled to the diffraction grating 12 through the lens 13. The light P1 spectrally dispersed by the diffraction grating 12 is focused by the lens 13 for each wavelength component, and reaches the filter 19. The filter 19 has an optical aperture corresponding to each wavelength component (or a filter whose absorptance or reflectance is different from that of the surroundings), and selectively passes a plurality of wavelength components from the wavelength band constituting the light pulse Pa. In addition, the propagation timings of the plurality of wavelength components are shifted from each other by the pulse stretcher 18.

Each wavelength component passing through the filter 19 is focused at one point on the diffraction grating 16 by the lens 15. The plurality of wavelength components passing through the filter 19 are focused and combined by the lens 15 and the diffraction grating 16, and become the multi pulse with band control (light pulse train Pb).

The dispersion measurement apparatus 1A of the above embodiment may include the pulse forming unit 3A of the present modification instead of the pulse forming unit 3. Even in this case, the same effects as those of the above embodiment can be preferably achieved.

(Second Modification)

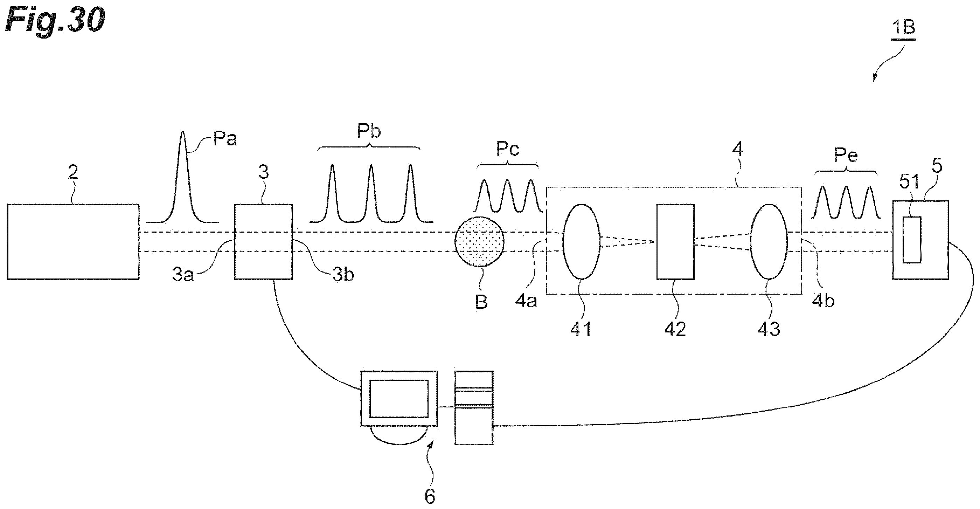

FIG. 30 is a diagram illustrating a configuration of a dispersion measurement apparatus 1B according to a second modification of the above embodiment. The dispersion measurement apparatus 1B of the present modification further includes a correlation optical system 4 in addition to the configuration of the dispersion measurement apparatus 1A of the above embodiment. A light input end 4a of the correlation optical system 4 is optically coupled to the light output end 3b of the pulse forming unit 3 spatially. A light output end 4b of the correlation optical system 4 is optically coupled to the image sensor 51 of the imaging unit 5 spatially or via an optical waveguide such as an optical fiber. That is, the correlation optical system 4 is disposed on an optical path between the measurement object B and the image sensor 51.

The correlation optical system 4 receives the light pulse train Pc passed through the measurement object B, and outputs correlation light Pe being a light pulse train including a cross-correlation or an autocorrelation of the light pulse train Pc. In the present embodiment, the correlation optical system 4 includes a lens 41, an optical element 42, and a lens 43. The lens 41 is provided on an optical path between the pulse forming unit 3 and the optical element 42, and focuses the light pulse train Pc passed through the measurement object B on the optical element 42.

The optical element 42 is, for example, an emission material including at least one of a nonlinear optical crystal that generates a second harmonic (SHG) and a fluorescent material. Examples of the nonlinear optical crystal include KTP (KTiOPO$_4$) crystal, LBO (LiB$_3$O$_5$) crystal, and BBO (β-BaB$_2$O$_4$) crystal. Examples of the fluorescent material include coumarin, stilbene, and rhodamine. The optical element 42 inputs the light pulse train Pc, and generates the correlation light Pe including the cross-correlation or the autocorrelation of the light pulse train Pc. The lens 43 collimates or focuses the correlation light Pe output from the optical element 42.

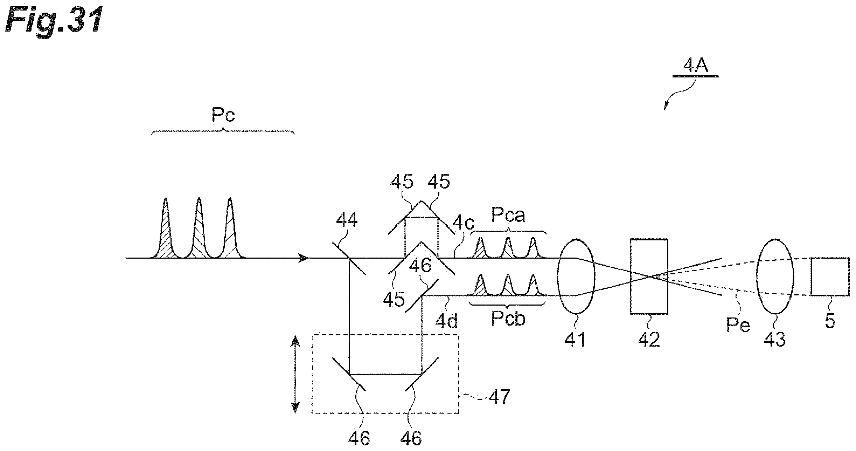

A configuration example of the correlation optical system 4 will be described in detail. FIG. 31 is a diagram schematically illustrating a correlation optical system 4A for generating the correlation light Pe including the autocorrelation of the light pulse train Pc as a configuration example of the correlation optical system 4. The correlation optical system 4A includes a beam splitter 44 as an optical branching component for branching the light pulse train Pc into two beams. The beam splitter 44 is optically coupled to the pulse forming unit 3 illustrated in FIG. 1 via the measurement object B, and transmits a part of the light pulse train Pc passed through the measurement object B and reflects the remaining part. The branching ratio of the beam splitter 44 is, for example, 1:1.

One light pulse train Pca branched by the beam splitter 44 reaches the lens 41 through an optical path 4c including a plurality of mirrors 45. The other light pulse train Pcb branched by the beam splitter 44 reaches the lens 41 through an optical path 4d including a plurality of mirrors 46.

An optical length of the optical path 4c is different from an optical length of the optical path 4d. Therefore, the plurality of mirrors 45 and the plurality of mirrors 46 constitute a delay optical system for providing a time difference between the one light pulse train Pca and the other light pulse train Pcb branched by the beam splitter 44.

Further, at least part of the plurality of mirrors 46 are mounted on a movable stage 47, and the optical length of the optical path 4d is variable. Therefore, in this configuration, the time difference between the light pulse train Pca and the light pulse train Pcb can be made variable.

In this example, the optical element 42 includes a nonlinear optical crystal. The lens 41 focuses the light pulse trains Pca and Pcb toward the optical element 42, and causes the optical axes of the light pulse trains Pca and Pcb to intersect with each other at a predetermined angle in the optical element 42.

As a result, in the optical element 42 being the nonlinear optical crystal, a second harmonic is generated starting from the intersection of the light pulse trains Pca and Pcb. The second harmonic is the correlation light Pe, and includes the autocorrelation of the light pulse train Pc. The correlation light Pe is collimated or focused by the lens 43, and then input to the imaging unit 5.

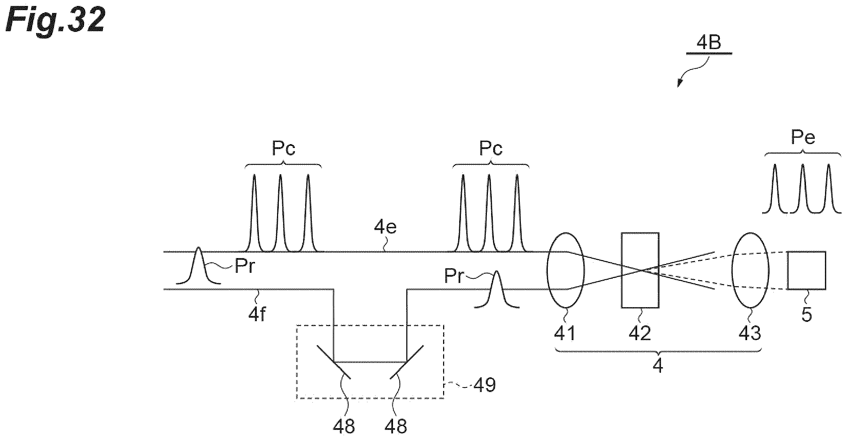

FIG. 32 is a diagram schematically illustrating a correlation optical system 4B for generating the correlation light Pe including the cross-correlation of the light pulse train Pc as another configuration example of the correlation optical system 4. In the correlation optical system 4B, the light pulse train Pc reaches the lens 41 through an optical path 4e, and a reference light pulse Pr being a single pulse reaches the lens 41 through an optical path 4f.

The optical path 4f includes a plurality of mirrors 48, and is curved in a U-shape. Further, at least part of the plurality of mirrors 48 are mounted on a movable stage 49, and an optical length of the optical path 4f is variable. Therefore, in this configuration, the time difference (timing difference reaching the lens 41) between the light pulse train Pc and the reference light pulse Pr can be made variable.

In this example also, the optical element 42 includes a nonlinear optical crystal. The lens 41 focuses the light pulse train Pc and the reference light pulse Pr toward the optical element 42, and causes the optical axis of the light pulse train Pc and the optical axis of the reference light pulse Pr to intersect with each other at a predetermined angle in the optical element 42.

As a result, in the optical element 42 being the nonlinear optical crystal, a second harmonic is generated starting from the intersection of the light pulse train Pc and the reference light pulse Pr. The second harmonic is the correlation light Pe, and includes the cross-correlation of the light pulse train Pc. The correlation light Pe is collimated or focused by the lens 43, and then input to the imaging unit 5.

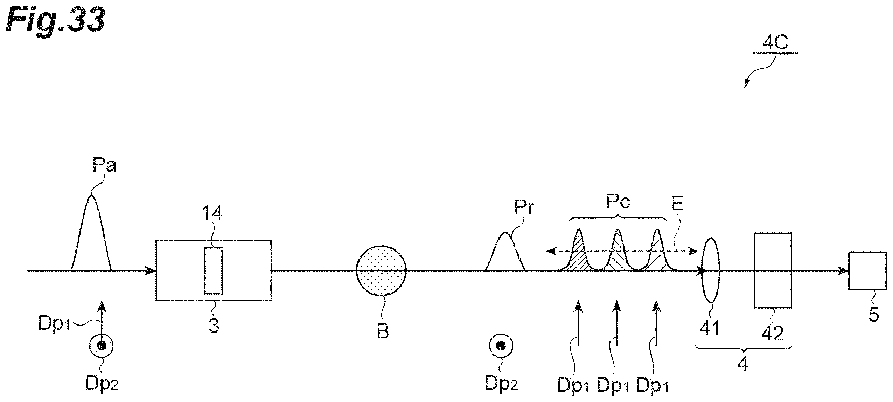

FIG. 33 is a diagram schematically illustrating a correlation optical system 4C for generating the correlation light Pe including the cross-correlation of the light pulse train Pc as still another configuration example of the correlation optical system 4. In this example, the SLM 14 of the pulse forming unit 3 is a polarization dependent type spatial light modulator having a modulation function in a first polarization direction.

In addition, a polarization plane of the light pulse Pa input to the pulse forming unit 3 is inclined with respect to the polarization direction in which the SLM 14 has the modulation function, and the light pulse Pa includes a polarization component (arrow $Dp_1$ in the drawing) in the first polarization direction and a polarization component (symbol $Dp_2$ in the drawing) in a second polarization direction orthogonal to the first polarization direction. Further, the polarization of the light pulse Pa may be not only the above-described polarization (inclined linear polarization) but also elliptical polarization.

The polarization component of the first polarization direction in the light pulse Pa is modulated by the SLM 14, output from the pulse forming unit 3 as the light pulse train Pb, and passed through the measurement object B to become the light pulse train Pc. On the other hand, the polarization component of the second polarization direction in the light pulse Pa is not modulated by the SLM 14, and output from the pulse forming unit 3 without change. The unmodulated polarization component is provided to the correlation optical system 4 coaxially with the light pulse train Pc as a reference light pulse Pr being a single pulse.

The correlation optical system 4 generates the correlation light Pe including the cross-correlation of the light pulse train Pc from the light pulse train Pc and the reference light pulse Pr. In this configuration example, by providing the delay to the light pulse train Pc by the SLM 14 and making the delay time variable (arrow E in the drawing), the time difference (timing difference reaching the lens 41) between the light pulse train Pc and the reference light pulse Pr can be made variable, and the correlation light Pe including the cross-correlation of the light pulse train Pc can be preferably generated in the correlation optical system 4.

A plurality of light pulses constituting the correlation light Pe have feature values similar to the feature values (peak intensities $PE_1$ to $PE_3$, full widths at half maximum $W_1$ to $W_3$, peak time intervals $G_{1,2}$ and $G_{2,3}$) shown in FIG. 6. Further, when the measurement object B has no wavelength dispersion, the temporal waveform of the correlation light Pe is substantially the same as the temporal waveform of the light pulse train Pb.

On the other hand, when the measurement object B has a wavelength dispersion, the temporal waveform of the correlation light Pe greatly changes from the temporal waveform of the light pulse train Pb, as in the temporal waveform of the light pulse train Pc shown in (b) in FIG. 6. For example, the peak intensities $PE_1$ to $PE_3$ of the light pulses of the correlation light Pe greatly decrease as compared with the light pulse train Pb, and the full widths at half maximum $W_1$ to $W_3$ of the light pulses of the correlation light Pe significantly increase as compared with the light pulse train Pb. In addition, the peak time interval $G_{1,2}$ of the light pulses of the correlation light Pe is much longer than that of the light pulse train Pb.

As described above, when the measurement object B has the wavelength dispersion, the feature values (peak intensities $PE_1$ to $PE_3$, full widths at half maximum $W_1$ to $W_3$, peak time intervals $G_{1,2}$ and $G_{2,3}$) of the temporal waveform of the correlation light Pe greatly change as compared with the case where the measurement object B does not have the wavelength dispersion. Further, the amount of change depends on the wavelength dispersion amount of the measurement object B. Therefore, the wavelength dispersion amount of the measurement object B can be accurately and easily known by observing the change in the feature value of the temporal waveform of the correlation light Pe.

Referring again to FIG. 30. The imaging unit 5 of present modification images the correlation light Pe output from the correlation optical system 4, and generates the imaging data including the two-dimensional image. For the above, the imaging unit 5 includes the image sensor 51 being optically coupled to the correlation optical system 4. The image sensor 51 has the plurality of pixels arranged two-dimensionally, and is the imaging element capable of performing imaging at the imaging interval shorter than the minimum peak interval of the light pulse train Pb (in other words, the imaging interval capable of acquiring the temporal waveform of the correlation light Pe). The plurality of imaging data for each time obtained in this manner are sent to the operation unit 6.

The operation unit 6 detects the temporal waveform of the correlation light Pe for each pixel of the image sensor 51 from the plurality of imaging data for each time provided from the imaging unit 5. That is, the operation unit 6 generates time-series data representing the temporal waveform of the correlation light Pe for each pixel of the image sensor 51. Further, the operation unit 6 estimates the partial wavelength dispersion amount in the measurement object B (that is, of a portion corresponding to each pixel), for each pixel, based on the feature value of the temporal waveform of each pixel.

As described above, various feature values (for example, pulse interval, peak intensity, pulse width, and the like) in the temporal waveform of the correlation light Pe have a correlation with the wavelength dispersion amount of the measurement object B. Therefore, the operation unit 6 can accurately estimate the two-dimensional distribution of the wavelength dispersion amount of the measurement object B by evaluating the feature value of the temporal waveform of the correlation light Pe for each pixel.

Further, in the present modification also, the operation unit 6 may calculate the two-dimensional distribution of at least one value of the refractive index, the reflectance, the absorptance, and the thickness of the measurement object B based on the two-dimensional distribution of the estimated wavelength dispersion amount.

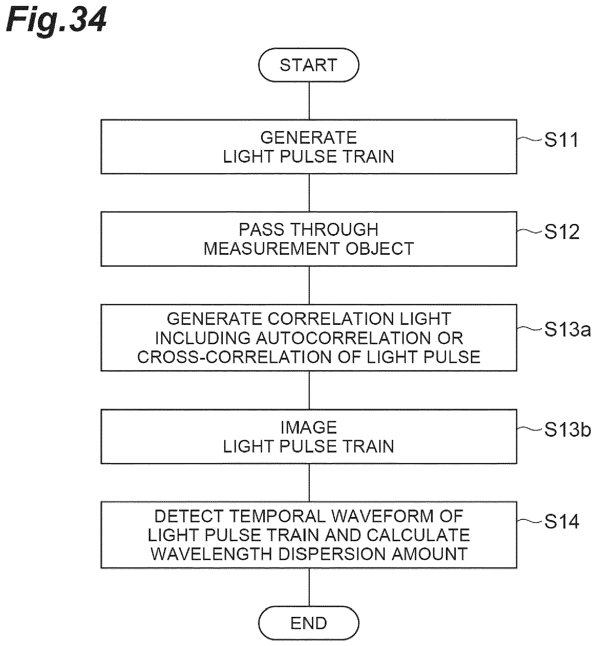

FIG. 34 is a flowchart illustrating a dispersion measurement method according to the present modification. The dispersion measurement method of the present modification includes a correlation light generation step S13a. In the correlation light generation step S13a, from the light pulse train Pc passed through the measurement object B, the correlation light Pe being the light pulse train including the cross-correlation or the autocorrelation of the light pulse train Pc is generated in the correlation optical system 4. Further, subsequently, in an imaging step S13b, the image sensor 51 capable of performing imaging at the imaging interval shorter than the minimum peak interval of the correlation light Pe is used to image the correlation light Pe, thereby generating the plurality of imaging data for each time. The other steps are the same as those in the above embodiment.

The dispersion measurement apparatus and the dispersion measurement method are not limited to the embodiments and configuration examples described above, and various modifications are possible.

In the above embodiment, as illustrated in FIG. 2, the method of forming the light pulse train Pb using the diffraction grating 12 and the SLM 14 is exemplified, and in the first modification, the method of forming the light pulse train Pb using the pulse stretcher 18 and the filter 19 is exemplified, and further, the method of forming the light pulse train Pb in the pulse forming unit 3 and the pulse forming step S11 is not limited thereto. For example, a variable mirror may be used instead of the SLM 14. Further, instead of the SLM 14, a liquid crystal display, an acousto-optical modulator, or the like that can electronically control the phase may be used.

Further, in the above embodiment, the method of generating the light pulse train Pe using the nonlinear optical crystal or the fluorescent material is exemplified, and further, the method of generating the light pulse train Pe in the correlation optical system 4 and the correlation light generation step S13a is not limited thereto.

Further, in the above embodiment, the two-dimensional distribution of the wavelength dispersion amount is calculated using the image sensor 51 having the plurality of pixels arranged two-dimensionally, and further, a one-dimensional distribution of the wavelength dispersion amount may be calculated using an image sensor having a plurality of pixels arranged one-dimensionally.

Further, as for the design method of the spectrum waveform in the phase spectrum design unit 22 and the intensity spectrum design unit 23 of the modulation pattern calculation apparatus 20 illustrated in FIG. 11 and the generation method of the multi pulse with band control according to the above, in the above embodiment, the configuration of calculating the spectrum waveform using the Fourier transform unit 25, the function replacement unit 26, the waveform function modification unit 27, the inverse Fourier transform unit 28, and the target generation unit 29 illustrated in FIG. 12 is exemplified.

According to the above configuration, the temporal waveform of the multi pulse constituting the light pulse train can be approximated to the desired shape, and the band component of each light pulse included in the light pulse train can be controlled with high accuracy. However, the generation method of the multi pulse with band control is not limited thereto, and for example, as described below, the spectrum waveform (spectrum modulation pattern) for generating the multi pulse may be obtained by a simpler method without using a complicated optimization algorithm.

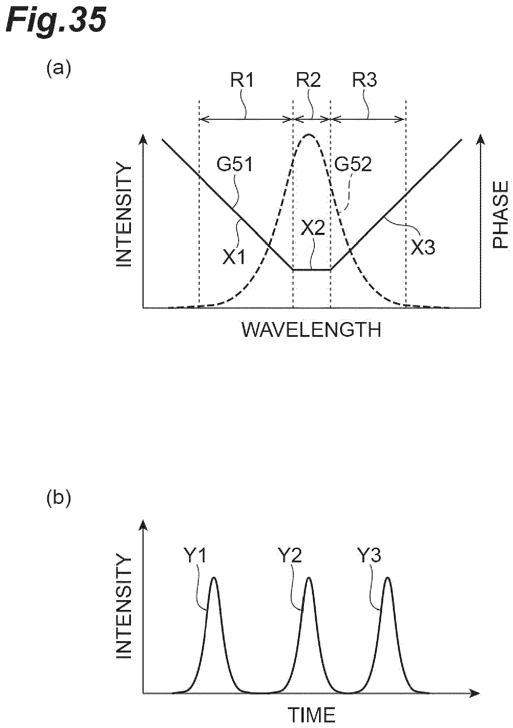

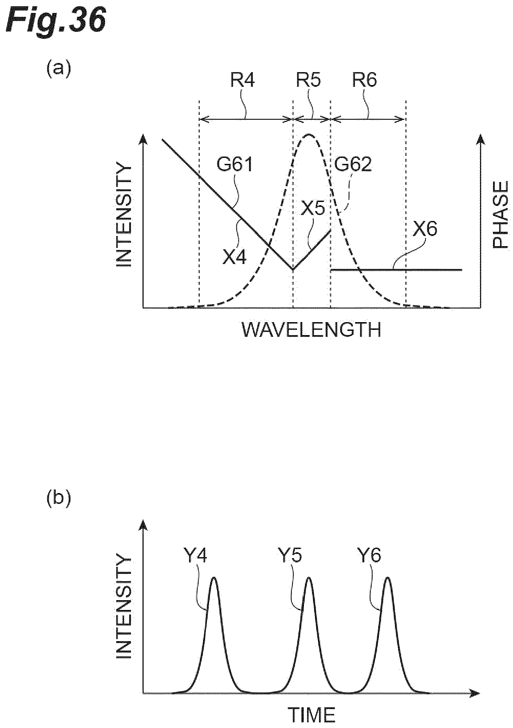

Specifically, as the generation method of the multi pulse with band control, a method of combining linear phase modulation patterns (linear phase patterns) based on information of the number of light pulses in the multi pulse to be generated, a band component constituting each light pulse, and an interval of the light pulses may be used. FIG. 35 and FIG. 36 described below illustrate conceptual diagrams for describing such a generation method of the multi pulse.

(a) in FIG. 35 is a graph showing an example of the spectrum waveform for generating the multi pulse with band control. In this graph, the horizontal axis indicates the wavelength, the left vertical axis indicates the light intensity, and the right vertical axis indicates the phase. Further, a graph G51 in the diagram shows the spectrum phase, and a graph G52 shows the spectrum intensity. Further, regions R1, R2, R3 in the diagram indicate wavelength regions set for the spectrum intensity waveform of the graph G52.

Further, in the spectrum phase pattern of the graph G51, a phase pattern X1 indicates a phase pattern in the wavelength region R1, a phase pattern X2 indicates a phase pattern in the wavelength region R2, and a phase pattern X3 indicates a phase pattern in the wavelength region R3. The phase patterns X1, X2, X3 are linear phase patterns having different slopes.

(b) in FIG. 35 is a graph showing the temporal waveform of the light pulse train corresponding to the spectrum waveform shown in (a) in FIG. 35. In this graph, the horizontal axis indicates the time, and the vertical axis indicates the light intensity. In this method, in the temporal waveform of the light pulse train, the light pulses are generated according to the number of linear phase patterns having different slopes included in the spectrum phase. In the example shown in FIG. 35, by providing the above linear phase patterns X1, X2, X3 in the wavelength regions R1, R2, R3, the multi pulse with band control including three light pulses Y1, Y2, Y3 is generated.

In the above method, the magnitude of the slope of the linear phase pattern Xi corresponds to the moving amount of the corresponding light pulse Yi in the temporal waveform. Further, the band component constituting the light pulse Yi can be controlled by the setting of the wavelength region Ri for the spectrum waveform. In the example shown in FIG. 35, the light pulse Y1 is generated by the spectrum intensity component of the wavelength region R1, the light pulse Y2 is generated by the spectrum intensity component of the wavelength region R2, and the light pulse Y3 is generated by the spectrum intensity component of the wavelength region R3.

In addition, in the above method, as for the control of the spectrum intensity component, for example, unnecessary intensity components may be subjected to filter processing (intensity cut by intensity modulation) in advance. Further, when the difference between the slopes of the phase patterns X1, X2, X3 is small, the light pulses may not be sufficiently separated in the obtained temporal waveform, and thus, it is preferable to set the phase pattern in consideration of such a point. Further, the phase pattern in the spectrum phase is a continuous pattern in the example shown in FIG. 35, but may be a discontinuous pattern.

(a) in FIG. 36 is a graph showing another example of the spectrum waveform for generating the multi pulse with band control. A graph G61 in the diagram shows the spectrum phase, and a graph G62 shows the spectrum intensity. Further, regions R4, R5, R6 in the diagram indicate wavelength regions set for the spectrum intensity waveform of the graph G62.

Further, in the spectrum phase pattern of the graph G61, a phase pattern X4 indicates a phase pattern in the wavelength region R4, a phase pattern X5 indicates a phase pattern in the wavelength region R5, and a phase pattern X6 indicates a phase pattern in the wavelength region R6. The phase patterns X4, X5, X6 are linear phase patterns having different slopes, and are discontinuous at the boundary between the phase patterns X5 and X6.

(b) in FIG. 36 is a graph showing the temporal waveform of the light pulse train corresponding to the spectrum waveform shown in (a) in FIG. 36. In the example shown in FIG. 36, by the setting of the above discontinuous phase pattern in the spectrum phase, the light pulse Y4 is generated by the spectrum intensity component of the wavelength region R4, the light pulse Y6 is generated by the spectrum intensity component of the wavelength region R5, and the light pulse Y5 is generated by the spectrum intensity component of the wavelength region R6.

As described above, by the setting of the phase pattern in the spectrum phase, it is possible to arbitrarily replace and set the band components constituting the light pulses in the temporal waveform.

The dispersion measurement apparatus of the above embodiment includes a pulse forming unit, an imaging unit, and an operation unit. The pulse forming unit forms a light pulse train including a plurality of second light pulses having time differences and center wavelengths different from each other from a first light pulse output from a light source. The imaging unit includes an image sensor capable of performing imaging at an imaging interval shorter than a minimum peak interval of the light pulse train, and images the light pulse train output from the pulse forming unit and then passed through a measurement object to generate imaging data. The operation unit receives the imaging data, detects a temporal waveform of the light pulse train for each pixel of the image sensor, and estimates a wavelength dispersion amount of the measurement object for each pixel of the image sensor based on a feature value of the temporal waveform.

The dispersion measurement method of the above embodiment includes a pulse forming step, an imaging step, and an operation step. The pulse forming step forms a light pulse train including a plurality of second light pulses having time differences and center wavelengths different from each other from a first light pulse output from a light source. The imaging step uses an image sensor capable of performing imaging at an imaging interval shorter than a minimum peak interval of the light pulse train, and images the light pulse train passed through a measurement object to generate imaging data. The operation step receives the imaging data, detects a temporal waveform of the light pulse train for each pixel of the image sensor, and estimates a wavelength dispersion amount of the measurement object for each pixel of the image sensor based on a feature value of the temporal waveform.

In the above dispersion measurement apparatus, the operation unit may calculate at least one value of a refractive index, a reflectance, an absorptance, and a thickness of the measurement object for each pixel of the image sensor based on the estimated wavelength dispersion amount. Further, in the above dispersion measurement method, in the operation step, at least one value of a refractive index, a reflectance, an absorptance, and a thickness of the measurement object may be calculated for each pixel of the image sensor based on the estimated wavelength dispersion amount.

In this case, a distribution of an optical property of the measurement object, an outer shape, or distributions of them can be measured in a short time.

In the above dispersion measurement apparatus and dispersion measurement method, the feature value of the temporal waveform may include a time interval of a plurality of light pulses included in the light pulse train.

The present inventors have found that, in various feature values of the temporal waveform, the pulse interval in particular has a significant correlation with the wavelength dispersion amount of the measurement object. Therefore, according to the above apparatus and method, the wavelength dispersion distribution in the measurement object can be estimated with higher accuracy.

The above dispersion measurement apparatus may further include a correlation optical system disposed on an optical path between the measurement object and the image sensor, and for generating correlation light including a cross-correlation or an autocorrelation of the light pulse train, from the light pulse train. Further, the above dispersion measurement method may further include a correlation light generation step of generating correlation light including a cross-correlation or an autocorrelation of the light pulse train, from the light pulse train generated in the pulse forming step and then passed through the measurement object.

When the correlation light including the cross-correlation or the autocorrelation of the light pulse train is generated using, for example, a nonlinear optical crystal, various feature values (for example, pulse interval, peak intensity, pulse width, and the like) in the temporal waveform of the correlation light have significant correlation with the wavelength dispersion of the measurement object. Therefore, according to the above apparatus and method, the wavelength dispersion distribution in the measurement object can be estimated with higher accuracy.

In the above dispersion measurement apparatus, the pulse forming unit may include a dispersive element for spatially separating a plurality of wavelength components included in the first light pulse for each wavelength, a spatial light modulator for shifting phases of the plurality of wavelength components output from the dispersive element from each other, and a focusing optical system for focusing the plurality of wavelength components output from the spatial light modulator. Further, in the above dispersion measurement method, in the pulse forming step, a plurality of wavelength components included in the first light pulse may be spatially separated for each wavelength, phases of the plurality of wavelength components may be shifted from each other using a spatial light modulator, and the plurality of wavelength components may be focused.

For example by the above apparatus and method, the light pulse train including the plurality of second light pulses having time difference and center wavelengths different from each other can be easily formed.

In the above dispersion measurement apparatus, the operation unit may estimate the wavelength dispersion amount of the measurement object by comparing the feature value of the temporal waveform calculated in advance on the assumption that the wavelength dispersion of the measurement object is zero and the feature value of the detected temporal waveform. Further, in the above dispersion measurement method, in the operation step, the wavelength dispersion amount of the measurement object may be estimated by comparing the feature value of the temporal waveform calculated in advance on the assumption that the wavelength dispersion of the measurement object is zero and the feature value of the detected temporal waveform.

According to the above apparatus and method, the wavelength dispersion distribution of the measurement object can be estimated more accurately.

## Industrial Applicability

The embodiments can be used as a dispersion measurement apparatus and a dispersion measurement method capable of measuring a wavelength dispersion by a simple configuration.

## Reference Signs List

1A, 1B - dispersion measurement apparatus, 2 - pulsed laser light source, 3, 3A - pulse forming unit, 3a - light input end, 3b - light output end, 4, 4A, 4B, 4C - correlation optical system, 4a - light input end, 4b - light output end, 4c - 4f - optical path, 5 - imaging unit, 6 - operation unit, 12 - diffraction grating, 13 - lens, 14 - spatial light modulator (SLM), 15 - lens, 16 - diffraction grating, 17 - modulation plane, 17a - modulation region, 18 - pulse stretcher, 19 - filter, 20 - modulation pattern calculation apparatus, 21 - arbitrary waveform input unit, 22 - phase spectrum design unit, 23 - intensity spectrum design unit, 24 - modulation pattern generation unit, 25 - Fourier transform unit, 26 - function replacement unit, 27 - waveform function modification unit, 28 - inverse Fourier transform unit, 29 - target generation unit, 29a - Fourier transform unit, 29b - spectrogram modification unit, 41 - lens, 42 - optical element, 43 - lens, 44 - beam splitter, 45, 46, 48 - mirror, 51 - image sensor, 61 - processor (CPU), 62 - ROM, 63 - RAM, 64 - input device, 65 - output device, 66 - communication module, 67 - auxiliary storage device, B - measurement object, $D_1$ - $D_3$ - domain, P1 - light, P2 - modulated light, Pa - light pulse, Pb, Pc, Pd - light pulse train, $Pb_1$ - $Pb_3$, $Pc_1$ - $Pc_3$, $Pd_1$ - $Pd_3$ - light pulse, Pca, Pcb - light pulse train, Pe - correlation light, Pr - reference light pulse, R1 - R6 - wavelength region, S11 - pulse forming step, S12 - step, S13, S13b - imaging step, S13a - correlation light generation step, S14 - operation step, SC - control signal, X1 - X6 - phase pattern, Y1 - Y6 - light pulse.

## Claims

1. A dispersion measurement apparatus comprising:

   a pulse forming unit (3, 3A) for forming a light pulse train (Pb) including a plurality of second light pulses having time differences and center wavelengths different from each other from a first light pulse (Pa) output from a light source (2);
   an imaging unit (5) including an image sensor (51) capable of performing imaging at an imaging interval shorter than a minimum peak interval of the light pulse train (Pb), and for imaging the light pulse train (Pc) output from the pulse forming unit (3, 3A) and then passed through a measurement object (B) to generate imaging data including a two-dimensional image; and
   an operation unit (6) for receiving the imaging data, detecting a temporal waveform of the light pulse train (Pc) for each pixel of the image sensor (51), and estimating a wavelength dispersion amount of the measurement object (B) for each pixel of the image sensor (51) based on a feature value of the temporal waveform to estimate a two-dimensional distribution of the wavelength dispersion amount of the measurement object.

2. The dispersion measurement apparatus according to Claim 1, wherein the operation unit (6) calculates at least one value of a refractive index, a reflectance, an absorptance, and a thickness of the measurement object (B) for each pixel of the image sensor (51) based on the estimated wavelength dispersion amount.

3. The dispersion measurement apparatus according to Claim 1 or 2, wherein the feature value of the temporal waveform includes a time interval of a plurality of light pulses included in the light pulse train (Pb, Pc, Pd).

4. The dispersion measurement apparatus according to any one of Claims 1 to 3, further comprising a correlation optical system (4, 4A, 4B, 4C) disposed on an optical path (4c - 4f) between the measurement object (B) and the image sensor (51), and for generating correlation light (Pe) including a cross-correlation or an autocorrelation of the light pulse train (Pc), from the light pulse train.

5. The dispersion measurement apparatus according to any one of Claims 1 to 4, wherein the pulse forming unit (3, 3A) includes:

a dispersive element (12) for spatially separating a plurality of wavelength components included in the first light pulse (Pa) for each wavelength,
a spatial light modulator (14) for shifting phases of the plurality of wavelength components output from the dispersive element (12) from each other, and
a focusing optical system (15) for focusing the plurality of wavelength components output from the spatial light modulator (14).

6. The dispersion measurement apparatus according to any one of Claims 1 to 5, wherein the operation unit (6) estimates the wavelength dispersion amount of the measurement object (B) by comparing the feature value of the temporal waveform calculated in advance on the assumption that the wavelength dispersion of the measurement object (B) is zero and the feature value of the detected temporal waveform.

7. A dispersion measurement method comprising:

a pulse forming step of forming a light pulse train (Pb) including a plurality of second light pulses having time differences and center wavelengths different from each other from a first light pulse (Pa) output from a light source (2);
an imaging step of using an image sensor (51) capable of performing imaging at an imaging interval shorter than a minimum peak interval of the light pulse train (Pb), and imaging the light pulse train (Pc) passed through a measurement object (B) to generate imaging data including a two-dimensional image; and
an operation step of receiving the imaging data, detecting a temporal waveform of the light pulse train (Pc) for each pixel of the image sensor (51), and estimating a wavelength dispersion amount of the measurement object (B) for each pixel of the image sensor (51) based on a feature value of the temporal waveform to estimate a two-dimensional distribution of the wavelength dispersion amount of the measurement object.

8. The dispersion measurement method according to Claim 7, wherein in the operation step, at least one value of a refractive index, a reflectance, an absorptance, and a thickness of the measurement object (B) is calculated for each pixel of the image sensor (51) based on the estimated wavelength dispersion amount.

9. The dispersion measurement method according to Claim 7 or 8, wherein the feature value of the temporal waveform includes a time interval of a plurality of light pulses included in the light pulse train (Pb, Pc, Pd).

10. The dispersion measurement method according to any one of Claims 7 to 9, further comprising a correlation light generation step of generating correlation light (Pe) including a cross-correlation or an autocorrelation of the light pulse train (Pc), from the light pulse train generated in the pulse forming step and then passed through the measurement object (B).

11. The dispersion measurement method according to any one of Claims 7 to 10, wherein in the pulse forming step, a plurality of wavelength components included in the first light pulse (Pa) are spatially separated for each wavelength, phases of the plurality of wavelength components are shifted from each other using a spatial light modulator (14), and the plurality of wavelength components are focused.

12. The dispersion measurement method according to any one of Claims 7 to 11, wherein in the operation step, the wavelength dispersion amount of the measurement object (B) is estimated by comparing the feature value of the temporal waveform calculated in advance on the assumption that the wavelength dispersion of the measurement object (B) is zero and the feature value of the detected temporal waveform.


**Patentansprüche**

1. Dispersionsmesseinrichtung, umfassend:

eine Impulsformungseinheit (3, 3A) zum Formen einer Lichtimpulsfolge (Pb), die eine Vielzahl von zweiten Lichtimpulsen beinhaltet, deren Zeitunterschiede und Mittenwellenlängen sich voneinander unterscheiden, ausgehend von einem ersten Lichtimpuls (Pa), der von einer Lichtquelle (2) ausgegeben wird;
eine Abbildungseinheit (5) die einen Bildsensor (51) beinhaltet, der zum Durchführen einer Abbildung mit einem Abbildungsintervall in der Lage ist, das kürzer als ein minimales Spitzenintervall der Lichtimpulsfolge (Pb) ist, und zum Abbilden der von der Impulsformungseinheit (3, 3A) ausgegebenen und anschließend durch ein Messobjekt (B) geleiteten Lichtimpulsfolge (Pc), um Bilddaten einschließlich eines zweidimensionalen Bildes zu generieren; und

eine Verarbeitungseinheit (6) zum Empfangen der Bilddaten, Erkennen einer zeitlichen Wellenform der Lichtimpulsfolge (Pc) für jedes Pixel des Bildsensors (51) und Schätzen eines Wellenlängendispersionsbetrages des Messobjekts (B) für jedes Pixel des Bildsensors (51) basierend auf einem Merkmalswert der zeitlichen Wellenform, um eine zweidimensionale Verteilung des Wellenlängendispersionsbetrages des Messobjekts zu schätzen.

2. Dispersionsmesseinrichtung nach Anspruch 1, wobei die Verarbeitungseinheit (6) für jedes Pixel des Bildsensors (51) basierend auf dem geschätzten Wellenlängendispersionsbetrag mindestens einen Wert eines Brechungsindexes, eines Reflexionsgrades, eines Absorptionsgrades und einer Dicke des Messobjekts (B) berechnet.

3. Dispersionsmesseinrichtung nach Anspruch 1 oder 2, wobei der Merkmalswert der zeitlichen Wellenform ein Zeitintervall einer Vielzahl von Lichtimpulsen beinhaltet, die in der Lichtimpulsfolge (Pb, Pc, Pd) beinhaltet sind.

4. Dispersionsmesseinrichtung nach einem der Ansprüche 1 bis 3, des Weiteren umfassend ein optisches Korrelationssystem (4, 4A, 4B, 4C), das in einem Strahlengang (4c - 4f) zwischen dem Messobjekt (B) und dem Bildsensor (51) angeordnet ist und dazu dient, aus der Lichtimpulsfolge (Pc) Korrelationslicht (Pe) zu generieren, das eine Kreuzkorrelation oder eine Autokorrelation der Lichtimpulsfolge beinhaltet.

5. Dispersionsmesseinrichtung nach einem der Ansprüche 1 bis 4, wobei die Impulsformungseinheit (3, 3A) beinhaltet:

ein Dispersionselement (12) zur räumlichen Trennung einer Vielzahl von Wellenlängenkomponenten, die in dem ersten Lichtimpuls (Pa) beinhaltet sind, für jede Wellenlänge,

einen räumlichen Lichtmodulator (14) zum Verschieben von Phasen der von dem Dispersionselement (12) ausgegebenen Vielzahl von Wellenlängenkomponenten zueinander, und

ein fokussierendes optisches System (15) zum Fokussieren der von dem räumlichen Lichtmodulator (14) ausgegebenen Vielzahl von Wellenlängenkomponenten.

6. Dispersionsmesseinrichtung nach einem der Ansprüche 1 bis 5, wobei die Verarbeitungseinheit (6) den Wellenlängendispersionsbetrag des Messobjekts (B) schätzt, indem sie den Merkmalswert der zeitlichen Wellenform, die vorab unter der Annahme berechnet wurde, dass die Wellenlängendispersion des Messobjekts (B) null ist, mit dem Merkmalswert der erkannten zeitlichen Wellenform vergleicht.

7. Dispersionsmessverfahren, umfassend::

einen Impulsformungsschritt zum Formen einer Lichtimpulsfolge (Pb), die eine Vielzahl von zweiten Lichtimpulsen beinhaltet, deren Zeitunterschiede und Mittenwellenlängen sich voneinander unterscheiden, ausgehend von einem ersten Lichtimpuls (Pa), der von einer Lichtquelle (2) ausgegeben wird;

einen Abbildungsschritt zum Verwenden eines Bildsensors (51), der zum Durchführen einer Abbildung mit einem Abbildungsintervall in der Lage ist, das kürzer als ein minimales Spitzenintervall der Lichtimpulsfolge (Pb) ist, und zum Abbilden der durch ein Messobjekt (B) geleiteten Lichtimpulsfolge (Pc), um Bilddaten einschließlich eines zweidimensionalen Bildes zu generieren; und

einen Verarbeitungsschritt (6) zum Empfangen der Bilddaten, Erkennen einer zeitlichen Wellenform der Lichtimpulsfolge (Pc) für jedes Pixel des Bildsensors (51) und zum Schätzen eines Wellenlängendispersionsbetrages des Messobjekts (B) für jedes Pixel des Bildsensors (51) basierend auf einem Merkmalswert der zeitlichen Wellenform, um eine zweidimensionale Verteilung des Wellenlängendispersionsbetrages des Messobjekts zu schätzen.

8. Dispersionsmessverfahren nach Anspruch 7, wobei in dem Verarbeitungsschritt für jedes Pixel des Bildsensors (51) basierend auf dem geschätzten Wellenlängendispersionsbetrag mindestens ein Wert eines Brechungsindexes, eines Reflexionsgrades, eines Absorptionsgrades und einer Dicke des Messobjekts (B) berechnet wird.

9. Dispersionsmessverfahren nach Anspruch 7 oder 8, wobei der Merkmalswert der zeitlichen Wellenform ein Zeitintervall einer Vielzahl von Lichtimpulsen beinhaltet, die in der Lichtimpulsfolge (Pb, Pc, Pd) enthalten sind.

10. Dispersionsmessverfahren nach einem der Ansprüche 7 bis 9, des Weiteren umfassend einen Korrelationslichterzeugungsschritt zum Erzeugen von Korrelationslicht (Pe), das eine Kreuzkorrelation oder eine Autokorrelation der Lichtimpulsfolge (Pc) beinhaltet, ausgehend von der Lichtimpulsfolge, die in dem Impulsformungsschritt erzeugt und anschließend durch das Messobjekt (B) geleitet wurde.

11. Dispersionsmessverfahren nach einem der Ansprüche 7 bis 10, wobei in dem Impulsformungsschritt eine Vielzahl von in dem ersten Lichtimpuls (Pa) beinhaltete Wellenlängenkomponenten für jede Wellenlänge räumlich voneinander getrennt werden, die Phasen der Vielzahl von Wellenlängenkomponenten unter Verwendung eines räumlichen Lichtmodulators (14) gegeneinander verschoben werden und die Vielzahl von Wellenlängenkomponenten fokussiert werden.

12. Dispersionsmessverfahren nach einem der Ansprüche 7 bis 11, wobei in dem Verarbeitungsschritt der Wellenlängendispersionsbetrag des Messobjekts (B) geschätzt wird, indem der Merkmalswert der zeitlichen Wellenform, die vorab unter der Annahme berechnet wurde, dass die Wellenlängendispersion des Messobjekts (B) null ist, mit dem Merkmalswert der erkannten zeitlichen Wellenform verglichen wird.

## Revendications

1. Appareil de mesure de la dispersion comprenant

une unité de formation d'impulsions (3, 3A) pour former un train d'impulsions lumineuses (Pb) incluant une pluralité de deuxièmes impulsions lumineuses ayant des différences de temps et des longueurs d'onde centrales différentes les unes des autres par rapport à une première impulsion lumineuse (Pa) émise par une source lumineuse (2) ;
une unité d'imagerie (5) incluant un capteur d'image (51) capable d'effectuer une imagerie à un intervalle d'imagerie plus court qu'un intervalle de crête minimum du train d'impulsions lumineuses (Pb), et d'imager le train d'impulsions lumineuses (Pc) émis par l'unité de formation d'impulsions (3, 3A) puis passé à travers un objet de mesure (B) pour générer des données d'imagerie incluant une image bidimensionnelle ; et
une unité opérationnelle (6) pour recevoir les données d'imagerie, détecter une forme d'onde temporelle du train d'impulsions lumineuses (Pc) pour chaque pixel du capteur d'image (51), et estimer une quantité de dispersion de longueur d'onde de l'objet de mesure (B) pour chaque pixel du capteur d'image (51) sur la base d'une valeur de caractéristique de la forme d'onde temporelle pour estimer une distribution bidimensionnelle de la quantité de dispersion de longueur d'onde de l'objet de mesure.

2. Appareil de mesure de la dispersion selon la revendication 1, dans lequel l'unité opérationnelle (6) calcule au moins une valeur d'un indice de réfraction, d'une réflectance, d'une absorbance et d'une épaisseur de l'objet de mesure (B) pour chaque pixel du capteur d'image (51) sur la base de la quantité de dispersion de longueur d'onde estimée.

3. Appareil de mesure de la dispersion selon la revendication 1 ou 2, dans lequel la valeur de caractéristique de la forme d'onde temporelle inclut un intervalle de temps d'une pluralité d'impulsions lumineuses incluses dans le train d'impulsions lumineuses (Pb, Pc, Pd).

4. Appareil de mesure de la dispersion selon l'une quelconque des revendications 1 à 3, comprenant en outre un système optique de corrélation (4, 4A, 4B, 4C) disposé sur un chemin optique (4c - 4f) entre l'objet de mesure (B) et le capteur d'image (51), et pour générer une lumière de corrélation (Pe) incluant une corrélation croisée ou une autocorrélation du train d'impulsions lumineuses (Pc), à partir du train d'impulsions lumineuses.

5. Appareil de mesure de la dispersion selon l'une quelconque des revendications 1 à 4, dans lequel l'unité de formation d'impulsions (3, 3A) inclut :

un élément dispersif (12) pour séparer spatialement une pluralité de composantes de longueur d'onde incluses dans la première impulsion lumineuse (Pa) pour chaque longueur d'onde,
un modulateur spatial de lumière (14) pour décaler les phases de la pluralité de composantes de longueur d'onde émises par l'élément dispersif (12) les unes par rapport aux autres, et
un système optique de focalisation (15) pour focaliser la pluralité de composantes de longueur d'onde émises par le modulateur spatial de lumière (14).

6. Appareil de mesure de la dispersion selon l'une quelconque des revendications 1 à 5, dans lequel l'unité opérationnelle (6) estime la quantité de dispersion de longueur d'onde de l'objet de mesure (B) en comparant la valeur de caractéristique de la forme d'onde temporelle calculée à l'avance en supposant que la dispersion de longueur d'onde de l'objet de mesure (B) est nulle et la valeur de caractéristique de la forme d'onde temporelle détectée.

7. Procédé de mesure de la dispersion comprenant

une étape de formation d'impulsions consistant à former un train d'impulsions lumineuses (Pb) incluant une pluralité de deuxièmes impulsions lumineuses ayant des différences de temps et des longueurs d'onde centrales différentes les unes des autres par rapport à une première impulsion lumineuse (Pa) émise par une source lumineuse (2) ;

une étape d'imagerie consistant à utiliser un capteur d'image (51) capable d'effectuer une imagerie à un intervalle d'imagerie inférieur à un intervalle de crête minimum du train d'impulsions lumineuses (Pb), et d'imager le train d'impulsions lumineuses (Pc) passant par un objet de mesure (B) pour générer des données d'imagerie incluant une image bidimensionnelle ; et

une étape d'opération consistant à recevoir les données d'imagerie, à détecter une forme d'onde temporelle du train d'impulsions lumineuses (Pc) pour chaque pixel du capteur d'image (51), et à estimer une quantité de dispersion de longueur d'onde de l'objet de mesure (B) pour chaque pixel du capteur d'image (51) sur la base d'une valeur de caractéristique de la forme d'onde temporelle pour estimer une distribution bidimensionnelle de la quantité de dispersion de longueur d'onde de l'objet de mesure.

8. Procédé de mesure de la dispersion selon la revendication 7, dans lequel, dans l'étape d'opération, au moins une valeur d'un indice de réfraction, d'une réflectance, d'une absorbance et d'une épaisseur de l'objet de mesure (B) est calculée pour chaque pixel du capteur d'image (51) sur la base de la quantité de dispersion de longueur d'onde estimée.

9. Procédé de mesure de la dispersion selon la revendication 7 ou 8, dans lequel la valeur de caractéristique de la forme d'onde temporelle inclut un intervalle de temps d'une pluralité d'impulsions lumineuses incluses dans le train d'impulsions lumineuses (Pb, Pc, Pd).

10. Procédé de mesure de la dispersion selon l'une quelconque des revendications 7 à 9, comprenant en outre une étape de génération de lumière de corrélation consistant à générer une lumière de corrélation (Pe) incluant une corrélation croisée ou une autocorrélation du train d'impulsions lumineuses (Pc), à partir du train d'impulsions lumineuses généré dans l'étape de formation d'impulsions et passant ensuite à travers l'objet de mesure (B).

11. Procédé de mesure de la dispersion selon l'une quelconque des revendications 7 à 10, dans lequel, lors de l'étape de formation d'impulsions, une pluralité de composantes de longueur d'onde incluses dans la première impulsion lumineuse (Pa) sont séparées spatialement pour chaque longueur d'onde, les phases de la pluralité de composantes de longueur d'onde sont décalées les unes par rapport aux autres en utilisant un modulateur spatial de lumière (14), et la pluralité de composantes de longueur d'onde est focalisée.

12. Procédé de mesure de la dispersion selon l'une quelconque des revendications 7 à 11, dans lequel, lors de l'étape d'opération, la quantité de dispersion de longueur d'onde de l'objet de mesure (B) est estimée en comparant la valeur de caractéristique de la forme d'onde temporelle calculée à l'avance en supposant que la dispersion de longueur d'onde de l'objet de mesure (B) est nulle et la valeur de caractéristique de la forme d'onde temporelle détectée.

Fig.1

EP 4 194 840 B1

## Fig.2

Fig.3

17a 17a 17a 17a 17a 17a 17a 17a 17a 17a 17a

~17

AB

AA

# Fig.4

(c)

(a)

WAVELENGTH

TIME

Pb₁(Pb)

Pb₂(Pb)

Pb₃(Pb)

(b)

Pb₂ — Pb

Pb₁

Pb₃

Fig.5

# *Fig.6*

# Fig.7

6

## Fig.8

```
          ┌─────────┐
          │  START  │
          └─────────┘
               │
   ┌───────────────────────────┐
   │         GENERATE          │──S11
   │     LIGHT PULSE TRAIN      │
   └───────────────────────────┘
               │
   ┌───────────────────────────┐
   │       PASS THROUGH         │──S12
   │    MEASUREMENT OBJECT      │
   └───────────────────────────┘
               │
   ┌───────────────────────────┐
   │           IMAGE           │──S13
   │     LIGHT PULSE TRAIN      │
   └───────────────────────────┘
               │
   ┌───────────────────────────┐
   │ DETECT TEMPORAL WAVEFORM OF│──S14
   │ LIGHT PULSE TRAIN AND CALCULATE│
   │ WAVELENGTH DISPERSION AMOUNT│
   └───────────────────────────┘
               │
          ┌─────────┐
          │   END   │
          └─────────┘
```

# Fig.9

(a)

(b)

# Fig.10

(a)

(b)

## Fig.11

# Fig.12

ARBITRARY WAVEFORM
INPUT UNIT
21

22,23

FOURIER TRANSFORM
UNIT
25

29

TARGET GENERATION
UNIT
29a

FOURIER TRANSFORM
UNIT

FUNCTION REPLACEMENT
UNIT
26

WAVEFORM FUNCTION
MODIFICATION UNIT
27

29b

SPECTROGRAM
MODIFICATION UNIT

INVERSE FOURIER
TRANSFORM UNIT
28

MODULATION PATTERN
GENERATION UNIT
24

## Fig.13

(1)  $A_0(\omega)$, and $\Psi_{n=0}(\omega)$ 　　　　A1

(2)  $\sqrt{A_0(\omega)}\exp\{i\,\Psi_n(\omega)\}$ 　→　 (3)  $\sqrt{b_n(t)}\exp\{i\,\Theta_n(t)\}$

(7)  $\boxed{B_n(\omega) := A_0(\omega)}$ 　　　　 (4)  $\boxed{b_n(t) := Target_0(t)}$

(6)  $\sqrt{B_n(\omega)}\exp\{i\,\Psi_n(\omega)\}$ 　←　 (5)  $\sqrt{Target_0(t)}\exp\{i\,\Theta_n(t)\}$

$\Psi_{IFTA}(\omega)$ 　　　A2

**Fig.14**

(1)  $A_0(\omega)$, and $\Phi_0(\omega)$

A3

(2-a)  $\sqrt{A_0(\omega)}\exp\{i\,\Phi_0(\omega)\}$ $\longrightarrow$ (3)  $\sqrt{a_0(t)}\exp\{i\,\phi_0(t)\}$

(4-a)

$$b_0(t) = \text{Target}_0(t)$$

(5)  $\sqrt{b_0(t)}\exp\{i\,\phi_0(t)\}$

(5-a)     $k=0$

$SG_{0.k}(\omega,t)$

(5-b)

Target $SG_0(\omega,t)$ $\longleftarrow$ Target SG  Function

(5-d)

$\sqrt{b_0(t)}\exp\{i\,\phi_{0,k}(t)\}$

$k=k+1$

A4

(5-c)

(6)  $\sqrt{B_{0,k}(\omega)}\exp\{i\,\Phi_{0,k}(\omega)\}$ $\longleftarrow$ Determination of evaluation value

Final result
$\Phi_{\text{TWC-TFD}}(\omega)$

EP 4 194 840 B1

## Fig.15

(1)  $A_0(\omega)$, and $\Phi_0(\omega)$

A3

(2-a)  $\sqrt{A_0(\omega)}\exp\{i\,\Phi_0(\omega)\}$

(3)  $\sqrt{a_0(t)}\exp\{i\,\phi_0(t)\}$

(4-a)

$$b_0(t) = \text{Target}_0(t)$$

(7-b)

Filtering the intensity spectrum  $\alpha\,B_{0,k}(\omega)$
with the initial intensity spectrum  $A_0(\omega)$

(5)  $\sqrt{b_0(t)}\exp\{i\,\phi_0(t)\}$

(5-a)                k=0

$$SG_{0,k}(\omega,t)$$

(5-b)

$$\text{Target } SG_0(\omega,t)$$

Target SG  Function

(5-e)

$\sqrt{b_{0,k}(t)}\exp\{i\,\phi_0(t)\}$

k=k+1

A4

(5-c)

(6)  $\sqrt{B_{0,k}(\omega)}\exp\{i\,\Phi_{0,k}(\omega)\}$

Determination of evaluation value

Final result
$A_{\text{TWC-TFD}}(\omega)$

EP 4 194 840 B1

41

# Fig.16

(1) $A_0(\omega)$, and $\Phi_0(\omega)$

$\quad$ $\text{Target}_0(t)$

$\quad$ $p_0(t)$

(2) IFTA to find $\Phi_{\text{IFTA}}(\omega)$

(3) IFTA to find $A_{\text{IFTA}}(\omega)$

(4) $\sqrt{A_{\text{IFTA}}(\omega)}\exp\{i\,\Phi_{\text{IFTA}}(\omega)\}$

$\quad\downarrow$ F.T.

(5) $\sqrt{a_{\text{IFTA}}(t)}\exp\{i\,\phi_{\text{IFTA}}(t)\}$

$\quad\downarrow$ S.G.

(6) $SG_{\text{IFTA}}(\omega,t)$

(7) $SG_{\text{IFTA}}(\omega,t)$ modification based on $p_0(t)$

(8) $\text{Target}_0\ SG(\omega,t)$

# Fig.17

(1) $A_{k=0}(\omega)$, and $\Psi_0(\omega)$

(2) $\sqrt{A_k(\omega)}\exp[i\Psi_0(\omega)]$

(7-a) $\Psi_k(\omega) := \Psi_0(\omega)$, and $C_k(\omega) := A_k(\omega)$

(7-b) $A_k(\omega) = \begin{cases} A_{k=0}(\omega), & A_{k=0}(\omega) < C_k(\omega) \\ C_k(\omega), & A_{k=0}(\omega) \geq C_k(\omega) \end{cases}$

(6) $\sqrt{C_k(\omega)}\exp[i\Psi_k(\omega)]$

$A_{IFTA}(\omega)$

(3) $\sqrt{b_k(t)}\exp[i\Theta_k(t)]$

(4) $b_k(t) := Target_0(t)$

(5) $\sqrt{Target_0(t)}\exp[i\Theta_k(t)]$

A5

A6

## Fig.18

## Fig.19

(a)

(b)

Fig.20

# *Fig.21*

(a)

(b)

Fig.22

## Fig.23

(a)

(b)

## Fig.24

## Fig.25

## *Fig.26*

(a)

THIRD-ORDER DISPERSION
AMOUNT ($\times 10^3$ fs$^3$)

(b)

THIRD-ORDER DISPERSION
AMOUNT ($\times 10^3$ fs$^3$)

## Fig.27

## Fig.28

Fig.29

**Fig.30**

EP 4 194 840 B1

EP 4 194 840 B1

*Fig.31*

Fig.32

Fig.33

EP 4 194 840 B1

# Fig.34

```
                    ┌──────────┐
                    │  START   │
                    └──────────┘
                         │
        ┌────────────────────────────────────┐
        │            GENERATE                │───S11
        │        LIGHT PULSE TRAIN           │
        └────────────────────────────────────┘
                         │
        ┌────────────────────────────────────┐
        │         PASS THROUGH               │───S12
        │      MEASUREMENT OBJECT            │
        └────────────────────────────────────┘
                         │
        ┌────────────────────────────────────┐
        │   GENERATE CORRELATION LIGHT       │
        │   INCLUDING AUTOCORRELATION OR     │───S13a
        │  CROSS-CORRELATION OF LIGHT PULSE  │
        └────────────────────────────────────┘
                         │
        ┌────────────────────────────────────┐
        │             IMAGE                  │───S13b
        │        LIGHT PULSE TRAIN           │
        └────────────────────────────────────┘
                         │
        ┌────────────────────────────────────┐
        │  DETECT TEMPORAL WAVEFORM OF       │
        │  LIGHT PULSE TRAIN AND CALCULATE   │───S14
        │  WAVELENGTH DISPERSION AMOUNT      │
        └────────────────────────────────────┘
                         │
                    ┌──────────┐
                    │   END    │
                    └──────────┘
```

# Fig.35

(a)

(b)

## Fig.36

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04177141 A
- JP H05248996 A
- EP 3438730 A1
- JP 2006502407 A

**Non-patent literature cited in the description**

- **BINGWEI XU et al.** Quantitative investigation of the multiphoton intrapulse interference phase scan method for simultaneous phase measurement and compensation of femtosecond laser pulses. *Journal of the Optical Society of America B*, 2006, vol. 23 (4), 750-759